(19) Europäisches Patentamt
European Patent Office
Office européen des brevets

(11) **EP 4 191 316 B1**

(12) **EUROPÄISCHE PATENTSCHRIFT**

(45) Veröffentlichungstag und Bekanntmachung des Hinweises auf die Patenterteilung:
**26.06.2024 Patentblatt 2024/26**

(21) Anmeldenummer: **23151979.4**

(22) Anmeldetag: **20.05.2020**

(51) Internationale Patentklassifikation (IPC):
***G02B 23/02*** *(2006.01)* ***G02B 27/64*** *(2006.01)*

(52) Gemeinsame Patentklassifikation (CPC):
**G02B 27/646; G02B 23/02**

(54) **BEOBACHTUNGSFERNROHR**

OBSERVATION TELESCOPE

LUNETTE D'OBSERVATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.05.2019 AT 504792019**
**13.12.2019 AT 510942019**

(43) Veröffentlichungstag der Anmeldung:
**07.06.2023 Patentblatt 2023/23**

(60) Teilanmeldung:
**24176718.5**

(62) Dokumentnummer(n) der früheren Anmeldung(en) nach Art. 76 EPÜ:
**20175711.9 / 3 742 217**

(73) Patentinhaber: **Swarovski-Optik AG & Co KG.**
**6067 Absam (AT)**

(72) Erfinder:
• **FIEDLER, Albert**
**6020 Innsbruck (AT)**
• **KUHN, Martin**
**6671 Rieden (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
**WO-A1-2008/029860    WO-A1-2013/104657**
**US-A1- 2011 019 986    US-A1- 2016 202 457**

**Beschreibung**

Die Erfindung betrifft eine Teleskopoptik für ein Beobachtungsfernrohr.

Die Wirkung einer fernoptischen Einrichtung besteht darin, einem Betrachter einen entfernten Gegenstand unter einem größeren Sehwinkel erscheinen zu lassen, als es ohne Benutzung der fernoptischen Einrichtung möglich ist. Dementsprechend wird auch die Vergrößerung als das Verhältnis aus dem Tangens des Sehwinkels mit Instrument und dem Tangens des Sehwinkels ohne Instrument definiert. In diesem Sinne wird das entfernte Objekt durch die fernoptische Einrichtung dem Auge des Betrachters vergrößert abgebildet. Insbesondere bei transportablen fernoptischen Einrichtungen, wie beispielsweise Ferngläsern oder Beobachtungsteleskopen, kann ein zu großer Wert der Vergrößerung der Benutzbarkeit der fernoptischen Einrichtung aber entgegenstehen. Ein freihändiges Halten des Instruments wird natürlicherweise immer von einem Wackeln oder Zittern begleitet sein und vom Benutzer als Verwackelungsunschärfe wahrgenommen werden. Dem kann beispielsweise durch Montage des fernoptischen Instruments auf einem stabilen Stativ entgegengewirkt werden. Andererseits ist es auch bekannt, fernoptische Einrichtungen mit einer eingebauten Vorrichtung zur Bildstabilisierung auszustatten. Dafür kann eine Linse oder Linsengruppe in der Teleskopoptik vorgesehen sein, die senkrecht zu der optischen Achse beweglich bzw. verstellbar gelagert ist. Von Sensoren detektierte Amplituden und Richtungen der Verkippung der optischen Achse bei einem Verwackeln liefern die Daten zur Ansteuerung von Aktoren, durch die die bewegliche Linse zur Kompensation in Gegenrichtung verschoben wird. Relevanter Stand der Technik ist z.B. in WO 2013/104657 A1, US 2011/019986 A1, US 2016/202457 A1 oder WO 2008/029860 A1 zu finden.

Es ist die Aufgabe der Erfindung eine Teleskopoptik für ein Beobachtungsfernrohr zu schaffen, das auch bei hohen Vergrößerungen eine große Benutzerfreundlichkeit gewährleistet.

Diese Aufgabe wird durch eine Teleskopoptik für ein Beobachtungsfernrohr gemäss Anspruch 1, mit einem Objektivlinsensystem, mit einem Prismen-Umkehrsystem und mit einem Okularlinsensystem, wobei ein von dem Objektivlinsensystem erzeugtes Bild eines Gegenstands zwischen dem Prismen-Umkehrsystem und dem Okularlinsensystem liegt, und wobei das Objektivlinsensystem, in einer objektseitig beginnenden Reihenfolge, eine erste Linsengruppe G1 mit einer positiven Brechkraft, eine zweite Linsengruppe G2 mit einer negativen Brechkraft und eine dritte Linsengruppe G3 mit zumindest einer Linse mit negativer Brechkraft umfasst, und wobei die zweite Linsengruppe G2 zum Fokussieren parallel zu einer optischen Achse verstellbar ist, und wobei die dritte Linsengruppe G3 zur Veränderung der Lage des Bildes senkrecht zu der optischen Achse verstellbar ist, und wobei zumindest eine Linse mit negativer Brechkraft der dritten Linsengruppe G3 eine negative Brechkraft aufweist, gelöst.

Dies hat den Vorteil, dass dadurch der Strahlengang im Bereich des Prismen-Umkehrsystems besonders "schlank" und langgestreckt gestaltet werden kann. Das heißt im Verhältnis zum Durchmesser der Objektivlinse braucht der Durchmesser für den Strahlengang im Bereich des Prismen-Umkehrsystems nur relativ klein dimensioniert zu werden.

Gemäß einer bevorzugten Weiterbildung der Teleskopoptik ist vorgesehen, dass der Wert eines Verhältnisses aus einer spezifischen lateralen Verschiebung der zumindest einen Linse mit negativer Brechkraft der dritten Linsengruppe G3 zur Bildstabilisierung und einer Brennweite der dritten Linsengruppe G3 in einem Bereich zwischen $-52 \times 10^{-3}$ /° und $-25 \times 10^{-3}$ /° liegt, wobei die spezifische laterale Verschiebung der zumindest einen Linse mit negativer Brechkraft der dritten Linsengruppe G3 zur Bildstabilisierung definiert ist durch die auf die Winkeleinheit bezogene laterale Verschiebung der zumindest einen Linse mit negativer Brechkraft der dritten Linsengruppe G3 in Bezug auf eine Verkippung der optischen Achse. Dies hat den Vorteil, dass damit Teleskopoptiken mit einer hohen optischen Qualität, d.h. mit möglichst geringen Abbildungsfehlern hergestellt werden können.

Vorteilhaft ist auch eine Ausbildung der Teleskopoptik, wonach ein Verhältnis aus einer Brennweite der ersten Linsengruppe G1 und einer Brennweite der zweiten Linsengruppe G2 in einem Bereich zwischen -0,30 und -0,16 liegt, d.h. wenn f'(G1) und f'(G2) die Bedingung erfüllen: -0,30 < f'(G1) / f'(G2) < -0,16.

Gemäß der Erfindung gemäss Anspruch 1 ist vorgesehen, dass die Brennweite der ersten Linsengruppe f'(G1), die Brennweite der zweiten Linsengruppe f'(G2) und die Brennweite der dritten Linsengruppe f'(G3) die Bedingungen -1,511 < f'(G1) / f'(G3) < - 0,704 und 2,348 < f'(G2) / f'(G3) < 9,240 erfüllen.

Eine bevorzugte Ausbildung der Teleskopoptik sieht vor, dass ein Verhältnis aus der Brennweite der dritten Linsengruppe G3 und der Brennweite des aus der ersten Linsengruppe G1 und der zweiten Linsengruppe G2 gebildeten Linsensystems einen Wert hat, der in einem Bereich zwischen -1,17 und -0,60 liegt, d.h. die Bedingung -1,17 < f'(G3) / f'(G1,G2) < -0,60 erfüllt.

Vorzugsweise ist auch vorgesehen, dass die erste Linsengruppe G1 des Objektivlinsensystems der Teleskopoptik, in objektseitig beginnender Reihenfolge, eine erste Linse L11 mit einer positiven Brechkraft, eine zweite Linse L12 mit einer positiven Brechkraft und eine dritte Linse L13 mit einer negativen Brechkraft umfasst.

In einer Weiterbildung der Teleskopoptik ist vorgesehen, dass die erste Linsengruppe G1 des Objektivlinsensystems 2, in objektseitig beginnender Reihenfolge, eine bikonvexe Linse L11, eine bikonvexe Linse L12 und eine bikonkave Linse L13 umfasst.

Gemäß einer vorteilhaften Ausführungsform der Erfindung kann es vorgesehen sein, dass die Linsen L12 und L13 der ersten Linsengruppe G1 des Objektivlinsensystems ein Kittglied bilden.

Weiters von Vorteil kann es sein, dass die zweite Linsengruppe G2 des Objektivlinsensystems eine konvexe Fläche in Richtung Objektiv und eine konkave Fläche in Richtung Okular aufweist.

Bei der Teleskopoptik kann auch eine Ausbildung erfolgen, bei der die zweite Linsengruppe G2 des Objektivlinsensystems 2, in objektseitig beginnender Reihenfolge, ein Kittglied mit einer bikonvexen Linse L21 und mit einer bikonkaven Linse L22 umfasst.

Weiters kann die zweite Linsengruppe G2 des Objektivlinsensystems, in objektseitig beginnender Reihenfolge, ein Kittglied mit einer konvex-konkaven Linse L21 und mit einer konvex-konkaven Linse L22 umfassen.

Die zumindest eine Linse mit negativer Brechkraft der dritten Linsengruppe G3 des Objektivlinsensystems der Teleskopoptik ist vorteilhafterweise, in objektseitig beginnender Reihenfolge, als ein Kittglied mit einer konkav-konvexen Linse L31 und der bikonkaven Linse L32 ausgebildet.

Darüber hinaus kann die dritte Linsengruppe G3 des Objektivlinsensystems, in objektseitig beginnender Reihenfolge, eine Linse L33 mit positiver Brechkraft, bevorzugt ausgebildet als eine bikonvexe Linse, und das Kittglied mit negativer Brechkraft umfassen.

Eine vorteilhafte Weiterbildung der Teleskopoptik wird dadurch erreicht, dass eine Feldlinse 5 als eine vierte Linsengruppe G4 ausgebildet ist, wobei die vierte Linsengruppe G4, in objektseitig beginnender Reihenfolge, eine konkav-konvexe Linse L41 und ein Kittglied aus einer konkav-konvexen Linse L42 und einer bikonkaven Linse L43 umfasst.

Vorzugsweise ist die Teleskopoptik auch derart ausgebildet, dass das Okularlinsensystem 3 eine fünfte Linsengruppe G5 umfasst, wobei die fünfte Linsengruppe G5, in objektseitig beginnender Reihenfolge, eine konkav-konvexe Linse L51, ein Kittglied aus einer bikonvexen Linse L52 und einer konkav-konvexen Linse L53, eine bikonvexe Linse L54 und eine konvex-konkave Linse L55 umfasst.

Die Weiterbildung der Teleskopoptik, wonach die vierte Linsengruppe G4 und die Linsen L51, L52, L53 und L54 der fünften Linsengruppe G5 in axialer Richtung, entsprechend der optischen Achse 7, verschiebbar ausgebildet sind, hat den Vorteil, dass die Gesamtvergrößerung des Teleskops stufenlos veränderbar ist.

Zum besseren Verständnis der Erfindung wird diese anhand der nachfolgenden Figuren näher erläutert.

Es zeigen jeweils in stark vereinfachter, schematischer Darstellung:

Fig. 1     ein erstes Ausführungsbeispiel der Teleskopoptik eines Beobachtungsfernrohrs;

Fig. 2     das Linsensystem des Objektivlinsensystems als ein Detail der Teleskopoptik gemäß Fig. 1;

Fig. 3     die Teleskopoptik in einer alternativen Vergrößerungseinstellung;

Fig. 4     Abbildungsfehler der Teleskopoptik in der minimalen Vergrößerung;

Fig. 5     Abbildungsfehler der Teleskopoptik in der maximalen Vergrößerung;

Fig. 6     Abbildungsfehler eines zweiten Ausführungsbeispiels der Teleskopoptik in der minimalen Vergrößerung;

Fig. 7     Abbildungsfehler des zweiten Ausführungsbeispiels der Teleskopoptik in der maximalen Vergrößerung;

Fig. 8     Abbildungsfehler eines dritten Ausführungsbeispiels der Teleskopoptik in der minimalen Vergrößerung;

Fig. 9     Abbildungsfehler des dritten Ausführungsbeispiels der Teleskopoptik in der maximalen Vergrößerung;

Fig. 10    ein viertes Ausführungsbeispiel der Teleskopoptik eines Beobachtungsfernrohrs.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

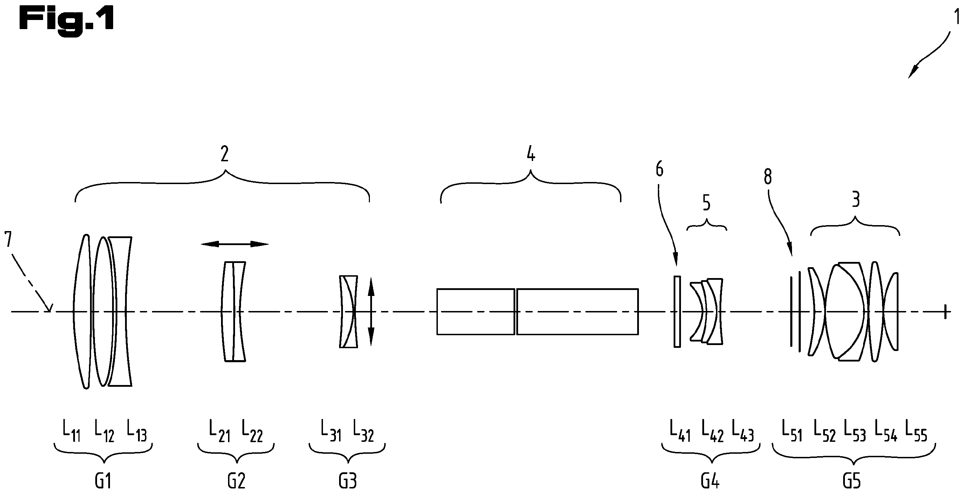

Die Fig. 1 zeigt ein bevorzugtes Ausführungsbeispiel der Teleskopoptik 1 eines Beobachtungsfernrohrs.

Bei der Darstellung der Komponenten der Teleskopoptik 1 in der Fig. 1 ist, wie sonst allgemein üblich, links die Objektseite und rechts die Beobachterseite vorausgesetzt. Demnach umfasst die Teleskopoptik 1 objektseitig ein Objektivlinsensystem 2 und beobachterseitig ein Okularlinsensystem 3. Auf das Objektivlinsensystem 2 folgt ein Prismenumkehrsystem 4 und eine Feldlinse 5. Wenn im weiteren Verlauf der Beschreibung vereinfachend die Begriffe "Objektiv", "Okular", "Objektivlinse" oder "Okularlinse" verwendet werden, so sei zur Klarstellung dessen ausdrücklich angemerkt, dass damit keine Einschränkung auf nur eine einzelne Linse bezweckt ist, sondern dass damit auch ein System von mehreren Linsen bezeichnet sein kann. Dies gilt selbstverständlich auch im Fall der "Feldlinse 5".

Zwischen dem Prismenumkehrsystem 4 und der Feldlinse 5 ist auch noch ein Deckglas 6 eingezeichnet. Das Deckglas 6 ist allerdings optional und kann vorgesehen sein, um das Teleskop mit einer mechanischen Schnittstelle zu versehen, an dem eine Trennung des Teleskops in 2 Komponenten vorgenommen werden kann. Wie der Darstellung zu entnehmen ist, umfassen das Objektivlinsensystem 2, das Okularlinsensystem 3 und auch die Feldlinse 5 jeweils aus mehreren Linsen bzw. Linsengruppen gebildete Linsensysteme. In der gewählten Reihenfolge - objektseitig beginnend - umfasst das Objektivlinsensystem 2 eine erste Linsengruppe G1, eine zweite Linsengruppe G2 und eine dritte Linsengruppe G3. In Fortsetzung dieser Bezeichnungsweise wird also die Feldlinse 5 durch eine vierte Linsengruppe G4 und das Okularlinsensystem 3 durch eine fünfte Linsengruppe G5 gebildet. Die erste Linsengruppe G1 des Objektivlinsensystems 2 umfasst die Linsen L11, L12 und L13. In analoger Weise erfolgt auch die Bezeichnung der Einzellinsen der Gruppen G2, G3, G4 und G5.

Die erste Linsengruppe G1 des Objektivlinsensystem 2 hat die Wirkung einer Sammellinse. Die zweite Linsengruppe G2 als auch die dritte Linsengruppe G3 des Objektivlinsensystems 2 haben jeweils die Wirkung einer Zerstreuungslinse. Dabei ist außerdem vorgesehen, dass die zweite Linsengruppe G2 des Objektivlinsensystems 2 in axialer Richtung, das heißt in Richtung der optischen Achse 7 der Teleskopoptik 1 verschiebbar ist. Sie hat somit die Funktion einer Fokussierlinse.

Die dritte Linsengruppe G3 des Objektivlinsensystems 2 ist senkrecht zu der optischen Achse 7 verschiebbar. Dadurch kann eine Bildstabilisierung eines in einer Bildebene 8 dargestellten Bildes erreicht werden. Durch Sensoren detektiere Kippbewegungen des Teleskops bzw. der optischen Achse 7 werden benutzt, eine laterale Bewegung der Linsengruppe G3 des Objektivlinsensystems 2 zu erzeugen, durch die erreicht wird, dass das in der Bildebene 8 dargestellte Bild relativ zu einer das Beobachtungfernrohr haltenden Person in Ruhe bleibt. Dies kann veranschaulicht werden anhand der Situation eines Fernrohrs, das mit seiner optischen Achse 7 auf einen (unendlich) weit entfernten Gegenstandspunkt ausgerichtet sei. Der auf der optischen Achse 7 befindlich gedachte Gegenstandspunkt wird durch ein achsparallel einfallendes Strahlenbündel dem Beobachter in ein achsparallel aus dem Okularlinsensystem des Fernrohrs austretendes Strahlenbündel abgebildet. Bei einer Kippbewegung des Fernrohrs kommt es zu einer Lageänderung, sodass derselbe Gegenstandspunkt nun relativ zu der optischen Achse 7 mit dieser einen von Null verschiedenen Sehwinkel einschließt. Dieser gegenstandsseitige Sehwinkel wird durch das Fernrohr vergrößert und erfährt das aus dem Okularlinsensystem des Fernrohrs austretende Strahlenbündel so eine entsprechende Richtungsänderung relativ zu der unveränderten Richtung auf den Gegenstandspunkt hin. Einem Beobachter erscheint diese Richtungsänderung als eine Zitterbewegung des vergrößert dargestellten Bilds, die umso stärker zur Wirkung kommt umso höher der Wert der Vergrößerung des Fernrohrs ist. Durch die laterale Verschiebung der dritten Linsengruppe G3 des Objektivlinsensystems 2 kann die Amplitude dieser Richtungsänderung nahezu auf Null reduziert oder doch zumindest so sehr verkleinert werden, dass sie nicht mehr als störend empfunden wird.

Bei der Linsengruppe G3 des Objektivlinsensystems 2, die die Wirkung einer Zerstreuungslinse hat, wurde gefunden, dass bei einer Kippbewegung der Teleskopoptik 1 im Uhrzeigersinn für eine Kompensation der lateralen Bewegung des Bildes in der Bildebene 8 die Linsengruppe G3 nach oben verschoben werden muss. Die Teleskopoptik 1 gemäß diesem Ausführungsbeispiel, wie sie nachstehend anhand ihrer technischen Daten in Tabelle 1 definiert ist, erlaubt eine Verkippung in einem Amplituden-Bereich von +/- 0,25°. Ein solcher Amplituden-Bereich ist typisch für handgehaltene Systeme. Das heißt, beim freien Halten eines Beobachtungfernrohrs, wie eines Fernglases, in den Händen einer Person ist mit Wackel- oder Zitterbewegungen in dem angegebenen Winkelbereich zu rechnen. Die auf die Winkeleinheit bezogene laterale Verschiebung der Linsengruppe G3 in Bezug auf eine Verkippung der optischen Achse 7 hat bei diesem Ausführungsbeispiel einen Wert von 6,02 mm/° ("spezifische laterale Verschiebung zur Bildstabilisierung").

Die Linsendaten der Teleskopoptik 1 gemäß diesem Ausführungsbeispiel sind in der Tabelle 1 aufgelistet. Dabei bedeutet "m" die Nummer der Oberfläche, wobei eine Zählweise beginnend am Objektseitigen Ende der Teleskopoptik 1 verwendet wird. Mit "r" wird der Radius der Krümmung der Oberfläche und mit "d" der Abstand zu der nächstfolgenden Oberfläche angegeben. Krümmungsradien und Abstände sind dabei in mm angegeben. Hinsichtlich der Vorzeichen der Krümmungsradien "r" der Oberflächen wird die auch sonst in der technischen Optik übliche Konvention zugrunde gelegt. D.h. der Radius wird angegeben als die Strecke vom Bezugspunkt der Oberfläche, d.h. dem Punkt, der mit der optischen Achse gemeinsam ist, hin zu ihrem Krümmungsmittelpunkt. Ist diese Richtung (vom Bezugspunkt der Oberfläche hin zu ihrem Krümmungsmittelpunkt) gleichgerichtet, wie die Richtung vom Objekt zum Beobachter (Hauptausbreitungsrichtung des Lichts, z-Koordinate), so hat der Radius ein positives Vorzeichen, andernfalls ist das Vorzeichen negativ. Durch die Angabe von "Infinity" für den Radius r wird eine plane Oberfläche bezeichnet. In der vierten Spalte, "Glas", ist die Glassorte in der Bezeichnungsweise der Kataloge der Firma Schott AG angegeben.

In der Tabelle 1 ist außerdem auch die Bildebene berücksichtigt, und zwar als "Oberfläche" m = 24. Durch den Wert des Abstands d bei der letzten Glasoberfläche, m = 33, ist außerdem auch der Augenabstand, d.h. die Position der Austrittspupille, angegeben.

Tabelle 1:

| m | r / mm | d / mm | Glas |
|---|--------|--------|------|
| 1 | 97,798 | 6,6 | FCD1 |
| 2 | -381,34 | 0,3 | |
| 3 | 107,37 | 8 | FCD1 |
| 4 | -118,76 | 0,995 | |
| 5 | -115,15 | 3,5 | N-KZFS4 |
| 6 | 185,2 | 35,5 | |
| 7 | 140,35 | 4,3 | N-F2 |
| 8 | -807,26 | 2,5 | N-KZFS4 |
| 9 | 97,628 | 37,5 | |
| 10 | -130,19 | 4,2 | N-LASF40 |
| 11 | -25,109 | 1 | N-LASF44 |
| 12 | 266 | 30 | |
| 13 | Infinity | 28,498 | N-BAK4 |
| 14 | Infinity | 1 | |
| 15 | Infinity | 44,882 | N-BAK4 |
| 16 | Infinity | 13,6 | |
| 17 | Infinity | 2 | N-BK7 |
| 18 | Infinity | 8,226 | |
| 19 | -13,152 | 1,2 | N-FK5 |
| 20* | -33,999 | 0,22 | |
| 21 | -40,287 | 4 | N-SF6 |
| 22 | -19,66 | 1,2 | N-FK5 |
| 23 | 106,35 | 26,45 | |
| 24 | Infinity | 8,2 | |
| 25 | -66,05 | 3,9 | N-LAK33 |
| 26 | -32 | 0,3 | |
| 27 | 45,566 | 14,4 | N-PSK3 |
| 28 | -19,793 | 1,2 | N-SF57 |
| 29 | -56,22 | 0,5 | |
| 30 | 111,14 | 5,2 | N-LAK33 |
| 31 | -77 | 0,5 | |
| 32 | 29,78 | 5 | N-SK5 |
| 33 | 445,58 | 17,7 | |

Dabei ist außerdem vorgesehen, dass die Oberfläche mit der Nummer 20, das heißt die Grenzfläche zwischen den Linsen L41 und L42 der Linsengruppe G4, eine asphärische Oberfläche ist. Diese asphärische Oberfläche 20 ist rotationssymmetrisch bezüglich der optischen Achse 7 und ist definiert durch die Beziehung

$$z(r) = c\, r^2 / ( \, 1 + \{ \, 1 - (1 + k)\, c^2\, r^2 \, \}^{1/2} \, )$$

z bezeichnet dabei die Koordinate in Richtung der optischen Achse 7 relativ zum Vertex (Scheitel) der Oberfläche als Funktion des Abstands r von der optischen Achse 7. Der Koeffizient c (= 1 / R) ist die Krümmung der Oberfläche an der Stelle des Scheitels (R wird auch Scheitelkrümmungsradius genannt) und k die Schwarzschildkonstante ("conic constant"). Bei diesem Ausführungsbeispiel hat die Konstante k der asphärischen Oberfläche 20 den Wert k = -20.

Die Teleskopoptik 1 ist somit insgesamt folgendermaßen aufgebaut. Die erste Linsengruppe G1 des Objektivlinsensystems 2 umfasst die beiden bikonvexen Linsen L11 und L12 und die bikonkave Linse L13. Die zweite Linsengruppe G2 ist als Kittglied mit der bikonvexen Linse L21 und der bikonkaven Linse L22 ausgebildet. Die dritte Linsengruppe G3 des Objektivlinsensystems 2 umfasst ebenfalls ein Kittglied, und zwar mit der konkav-konvexen Linse L31 und der bikonkaven Linse L32. Die Feldlinse 5 bzw. vierte Linsengruppe G4 umfasst die konkav-konvexe Linse L41 und ein Kittglied aus der konkav-konvexen Linse L42 und der bikonkaven Linse L43. Das Okular 3 bzw. die fünfte Linsengruppe G5 umfasst schließlich ein Linsensystem mit der konkav-konvexen Linse L51, dem Kittglied aus der bikonvexen Linse L52 und der konkav-konvexen Linse L53, der bikonvexen Linse L54 und der konvex-konkaven Linse L55.

In der Tabelle 2 sind die Daten der einzelnen Linsen bzw. die Gesamt-Brennweiten der jeweiligen Linsengruppen angegeben. "ne" ist der Brechungsindex und "νe" bedeutet die Abbe-Zahl (ν griechischer Kleinbuchstabe Ny). Als Bezugswellenlänge dient dabei die sogenannte "e-Linie" mit 546 nm. d bedeutet die Linsendicke und f' die Brennweite, jeweils in der Einheit mm.

Tabelle 2:

| Linse / Gruppe | ne | ve | d / mm | f' / mm |
|---|---|---|---|---|
| L11 | 1,49845 | 81,2 | 6,6 | 156,88 |
| L12 | 1,49845 | 81,2 | 8 | 114,48 |
| L13 | 1,61664 | 44,27 | 3,5 | -114,64 |
| G1 | | | | 143,15 |
| L21 | 1,62408 | 36,16 | 4,3 | 191,92 |
| L22 | 1,61664 | 44,27 | 2,5 | -141,09 |
| G2 | | | | -573,85 |
| L31 | 1,83935 | 37,04 | 4,2 | 36,4 |
| L32 | 1,80832 | 46,25 | 1 | -28,34 |
| G3 | | | | -120,7 |
| L41 | 1,48914 | 70,23 | 1,2 | -34,35 |
| L42 | 1,81266 | 25,16 | 4 | 43,47 |
| L43 | 1,48914 | 70,23 | 1,2 | -33,82 |
| G4 | | | | -27,37 |
| G5 | | | | 20,24 |

Die Teleskopoptik 1 hat insgesamt eine Vergrößerung von 34,3-fach und ein objektives Sehfeld von 2,18°. Dementsprechend wird ein subjektives Sehfeld von 69,6° erreicht.

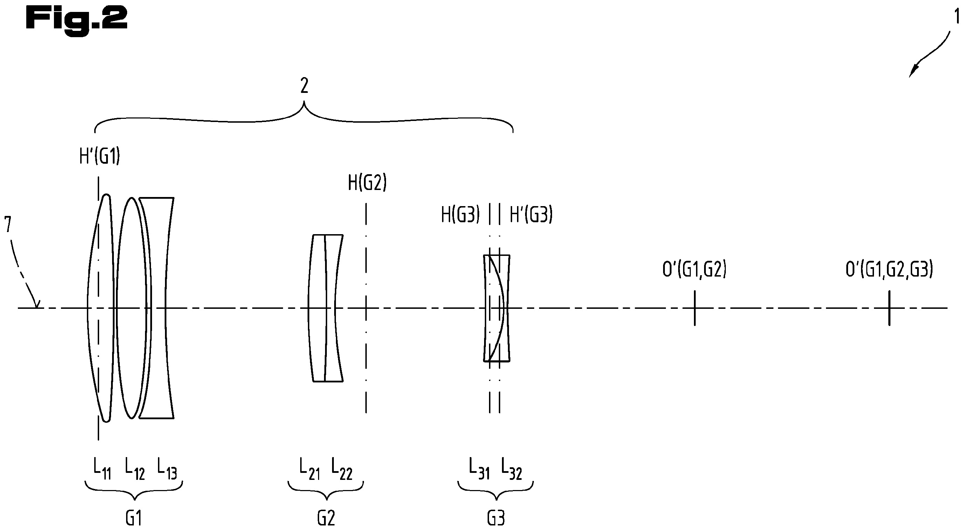

Die Fig. 2 zeigt als ein Detail der Teleskopoptik 1 gemäß Fig. 1 das Linsensystem des Objektivlinsensystems 2. Aus den geometrischen Beziehungen der Linsengruppen G1, G2 und G3 gemäß der Darstellung in Fig. 2 kann der Wert der lateralen Verschiebung der Linsengruppe G3 bezogen auf die Winkeleinheit abgeleitet werden. Dies ist möglich durch einen Vergleich der Wirkung des durch alle drei Linsengruppen, G1, G2 und G3, gebildeten Linsensystems und einem nur durch die erste Linsengruppe G1 und die zweite Linsengruppe G2 der Objektivoptik gebildeten Linsensystems. Ein unendlich weit entfernter Gegenstandspunkt auf der optischen Achse 7 würde unter der alleinigen Wirkung des Systems aus erster Linsengruppe G1 und zweiter Linsengruppe G2 in den okularseitigen Bildpunkt O' (G1, G2) abgebildet werden. Andererseits wird der gleiche Gegenstandspunkt durch die kombinierte Gesamtwirkung aller drei Linsengruppen G1, G2 und G3 in den okularseitigen Bildpunkt O' (G1, G2, G3) abgebildet. In der üblichen Bezeichnungsweise sind zu den Linsengruppen G1, G2 und G3 auch die gegenstandsseitigen bzw. bildseitigen Hauptebenen H bzw. H' eingezeichnet. Das Bild in O' (G1, G2) erfährt bei einem Kippen bzw. Verschwenken der Teleskopoptik 1 relativ zu einem ruhenden Koordinatensystem eine laterale Versetzung mit einem Wert von 2,877 mm/°. Dies entspricht näherungsweise der einem Grad (1°) entsprechenden Bogenlänge am Umfang eines Kreises, dessen Radius gleich ist dem Wert der Brennweite f' (G1, G2). Durch eine Querbewegung der Linsengruppe G3 (senkrecht relativ zu der optischen Achse 7) soll die laterale Versetzung des Bildes nahezu auf Null reduziert werden (relativ zum ruhenden Koordinatensystem). Dazu ist zusätzlich aber auch noch die abbildende Wirkung der Linsengruppe G3 insofern zu berücksichtigen, als es durch diese zusätzlich zu einer Verstärkung der lateralen Versetzung des Bildes im Verhältnis des Abbildungsmaßstabs einer Abbildung von der Bildebene in O' (G1, G2) in die Bildebene O' (G1, G2, G3) kommt.

Die laterale Versetzung der Linsengruppe G3 zur Bewirkung einer Bildstabilisierung berechnet sich auf der Grundlage der Größen f' (G1, G2) = 164,82 mm und dem Verhältnis der Abstände O' (G1, G2, G3) - H' (G3) zu O' (G1, G2) - H (G3):

$$116,853 \: / \: 58,949 \: \text{x} \: 2,877 = 5,703 \: \text{mm/°}$$

Tatsächlich müssen aber auch noch ein geringer Einfluss der Linsengruppe G4 als auch Abbildungsfehler berücksichtigt werden, sodass sich praktisch der schon weiter oben angegebene Wert von 6,02 mm/° ergibt.

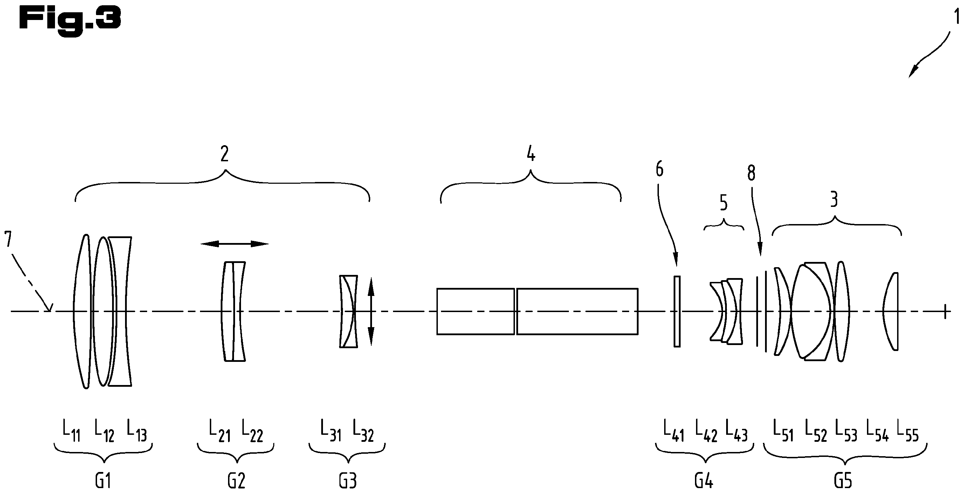

Die Fig. 3 zeigt die Teleskopoptik 1 in einer alternativen Vergrößerungseinstellung. Zur Verstellung der Gesamtvergrößerung der Teleskopoptik 1 sind die Linsengruppe G4 und die Linsen L51, L52, L53 und L54 der Linsengruppe G5 in axialer Richtung der optischen Achse 7 verschiebbar ausgebildet.

In der in Fig. 3 gezeigten Stellung der Linsengruppe G4 und G5 weist die Teleskopoptik 1 eine Gesamtvergrößerung von 17,8-fach auf. Die Daten der optisch wirksamen Oberflächen der Teleskopoptik 1 in dieser minimalen Vergrößerungseinstellung sind in der nachstehenden Tabelle 3 aufgelistet. Dabei wird ein objektives Sehfeld von 3,42° und ein subjektives Sehfeld von 57,5° erreicht. Die Okularbrennweite f' (G5) hat dabei einen Wert von f' (G5) = 26,07 mm. Die Teleskopoptik 1 weist somit eine zoombare Vergrößerungseinstellung mit einer stufenlos verstellbaren Vergrößerung zwischen einer minimalen Vergrößerung von 17,8-fach und einer maximalen Vergrößerung von 34,3-fach auf.

Tabelle 3:

| m | r / mm | d / mm | Glas |
|---|---|---|---|
| 1 | 97,798 | 6,6 | FCD1 |
| 2 | -381,34 | 0,3 | |
| 3 | 107,37 | 8 | FCD1 |
| 4 | -118,76 | 0,995 | |
| 5 | -115,15 | 3,5 | N-KZFS4 |
| 6 | 185,2 | 35,5 | |
| 7 | 140,35 | 4,3 | N-F2 |
| 8 | -807,26 | 2,5 | N-KZFS4 |
| 9 | 97,628 | 37,5 | |
| 10 | -130,19 | 4,2 | N-LASF40 |
| 11 | -25,109 | 1 | N-LASF44 |
| 12 | 266 | 30 | |
| 13 | Infinity | 28,498 | N-BAK4 |
| 14 | Infinity | 1 | |
| 15 | Infinity | 44,882 | N-BAK4 |
| 16 | Infinity | 13,6 | |
| 17 | Infinity | 2 | N-BK7 |
| 18 | Infinity | 14,538 | |

(fortgesetzt)

| m | r / mm | d / mm | Glas |
|---|---|---|---|
| 19 | -13,152 | 1,2 | N-FK5 |
| 20* | -33,999 | 0,22 | |
| 21 | -40,287 | 4 | N-SF6 |
| 22 | -19,66 | 1,2 | N-FK5 |
| 23 | 106,35 | 7,05 | |
| 24 | Infinity | 5,25 | |
| 25 | -66,05 | 3,9 | N-LAK33 |
| 26 | -32 | 0,3 | |
| 27 | 45,566 | 14,4 | N-PSK3 |
| 28 | -19,793 | 1,2 | N-SF57 |
| 29 | -56,22 | 0,5 | |
| 30 | 111,14 | 5,2 | N-LAK33 |
| 31 | -77 | 16,541 | |
| 32 | 29,78 | 5 | N-SK5 |
| 33 | 445,58 | 18,3 | |

In der Tabelle 4 sind Brennweiten von Teilsystemen der Teleskopoptik 1 gemäß dem ersten Ausführungsbeispiel aufgelistet.

Tabelle 4:

| | | f' / mm |
|---|---|---|
| Objektiv-Gesamtbrennweite bei minimaler Vergrößerung | $f'(G1,G2,G3,G4)_{min}$ | 463,23 |
| Objektiv-Gesamtbrennweite bei maximaler Vergrößerung | $f'(G1,G2,G3,G4)_{max}$ | 689,56 |
| Okularbrennweite bei minimaler Vergrößerung | $f'(G5)min$ | 26,07 |
| Okularbrennweite bei maximaler Vergrößerung | $f'(G5)max$ | 20,24 |
| Brennweite der Gruppen G1, G2 | $f'(G1,G2)$ | 164,82 |
| Brennweite der Gruppen G1, G2, G3 | $f'(G1,G2,G3)$ | 324,44 |

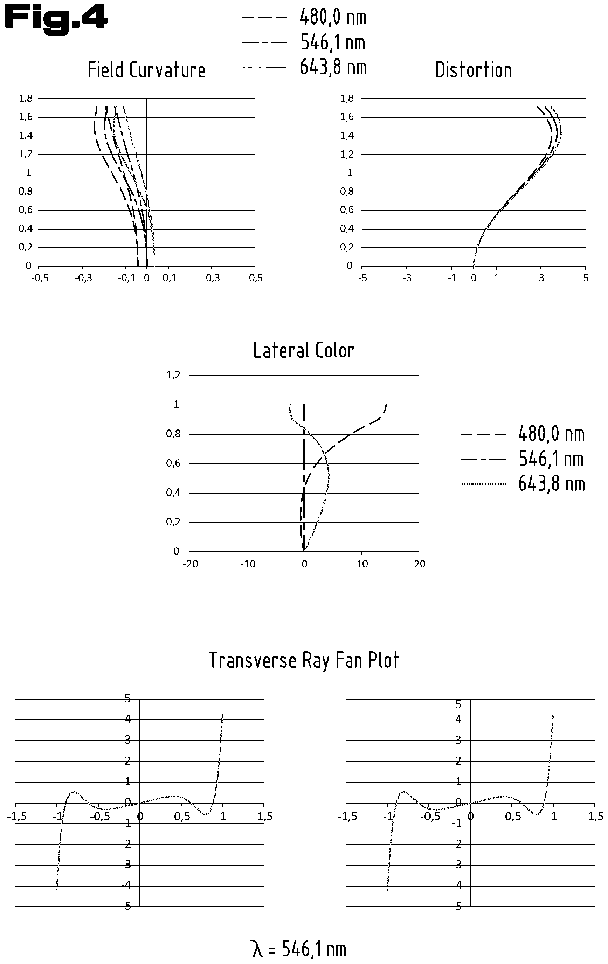

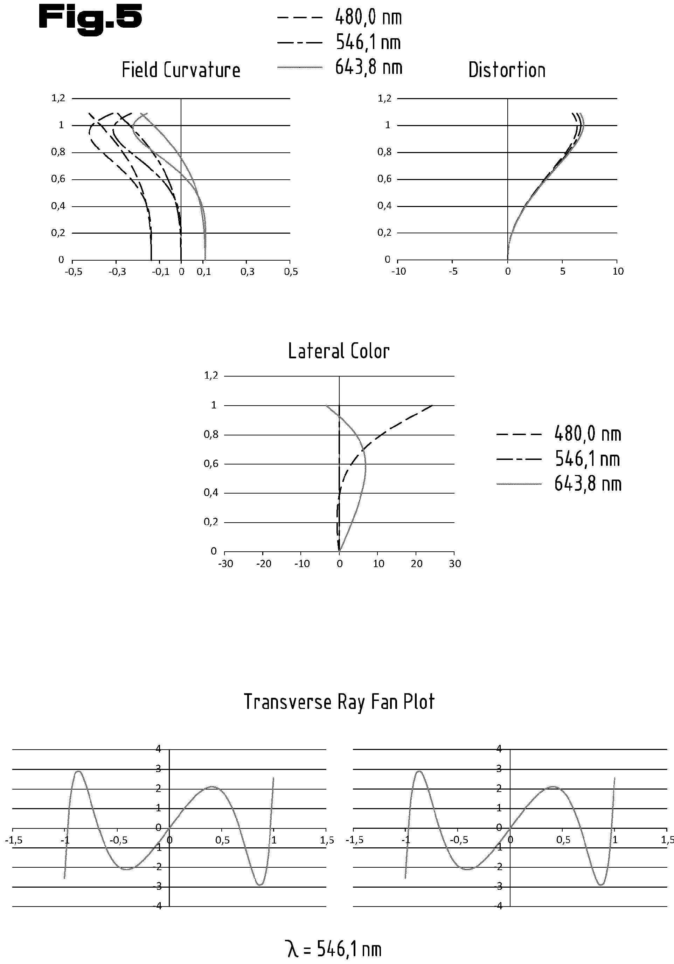

In den nachfolgenden Fig. 4 und 5 sind die Abbildungsfehler der Teleskopoptik 1 zu der minimalen und zu der maximalen Vergrößerung dargestellt.

Die Fig. 4 zeigt Diagramme der verschiedenen Abbildungsfehler der Teleskopoptik 1 bei der minimalen Vergrößerung. Dabei zeigt das Diagramm "field curvature" die Bildfeldwölbung ausgedrückt durch die Abweichung in Millimeter in Richtung der optischen Achse 7 (auf der Abszisse aufgetragen) in Abhängigkeit vom objektseitigen Sehwinkel w (aufgetragen auf der Ordinate). Dabei sind für jede der drei Wellenlängen jeweils die Abweichungen für eine Tangentialebene ("T") und eine sagitale Ebene ("S") aufgetragen. Die auf der Abszisse ablesbaren Werte der Versetzungen in Richtung der optischen Achse 7 ergeben sich, wenn man im mittleren Augenabstand eine (fehlerfreie) Paraxiallinse einsetzt. Diese Paraxiallinse fokussiert das Bündel und wird so das menschliche Auge simuliert. Als Brennweite der Paraxial-Linse wird ein Wert von +10 mm verwendet.

In dem Diagramm mit der Bezeichnung "distortion" ist die Verzeichnung, das heißt der Abbildungsfehler entsprechend einer in Abhängigkeit von dem objektivseitigen Sehwinkel w sich ändernden Werts der Vergrößerung in Prozent (auf der Abszisse) aufgetragen. Auf der Ordinate können die Werte des objektseitigen Sehwinkels w abgelesen werden.

Das Diagramm, bezeichnet mit "lateral color", zeigt den "Farbquerfehler" (Farbsaum), wobei auf der Ordinate wiederum der objektive Sehwinkel w angegeben ist. Auf der Abszisse sind laterale Abweichungen in der Fokusebene einer im mittleren Augenabstand angeordneten Paraxiallinse aufgetragen (mit einer Brennweite +10 mm und Durchmesser 5 mm).

Die beiden Diagramme, bezeichnet mit "transverse ray fan plot", zeigen die Fehler der sphärischen Aberration bzw. den Öffnungsfehler. Dieser ist auf den Ordinaten (ey und ex) als Wert des transversalen Versatzes in der Fokusebene einer hinter dem Okularlinsensystem 3 der Teleskopoptik 1 im mittleren Augenabstand angeordneten Paraxiallinse angegeben. Die Werte auf den Abszissen (Py und Px) entsprechen dem radialen Abstand eines Bereichs in einem Querschnitt des Strahlengangs relativ zu der optischen Achse 7.

Die Fig. 5 zeigt die verschiedenen Abbildungsfehler der Teleskopoptik 1 bei der maximalen Vergrößerung. Die Diagramme geben die gleichen Größen, wie oben schon für die Fig. 4 beschrieben, wieder. Das heißt, die Diagramme zeigen die Bildfeldwölbung, die Verzeichnung, den Farbquerfehler bzw. die chromatische Aberration und den Öffnungsfehler der Teleskopoptik 1 in der Vergrößerungseinstellung 34,3-fach.

Beispiel 2:

In der nachstehenden Tabelle 5 sind die Daten der Einzellinsen eines zweiten Ausführungsbeispiels der Teleskopoptik 1 aufgelistet. Anzahl und Bezeichnung der einzelnen Linsen bzw. Linsengruppen entsprechen der Darstellung wie in Fig. 1 gezeigt. Neben den Angaben zum Glas der einzelnen Linsen, dem Brechungsindex ne und der Abbe-Zahl ve sind die Werte der Linsendicke d und der jeweiligen Brennweite f' angegeben. Ebenso wie bei dem ersten Ausführungsbeispiel, sind die Linsengruppe G4 und die Linsen L51, L52, L53 und L54 der Linsengruppe G5 in Richtung der optischen Achse 7 verschiebbar und kann dadurch der Wert der Gesamtvergrößerung der Teleskopoptik 1 verändert werden (Fig. 1, 3).

Die der maximalen Vergrößerung (33,76-fach) der Teleskopoptik 1 entsprechende Anordnung der Linsenoberflächen sind in der Tabelle 6 aufgelistet. Zu jeder Oberflächennummer m - m in am objektseitigen Ende der Teleskopoptik 1 beginnender Zählweise - ist der jeweilige Krümmungsradius r und die Distanz zur nächstfolgenden Oberfläche d angegeben.

Tabelle 5:

|  | ne | ve | d / mm | f' / mm |
|---|---|---|---|---|
| L11 | 1,49845 | 81,2 | 7,1 | 145,233 |
| L12 | 1,49845 | 81,2 | 9,2 | 93,371 |
| L13 | 1,61664 | 44,27 | 3,5 | -97,227 |
| G1 |  |  |  | 120,999 |
| L21 | 1,62408 | 36,16 | 4,3 | 264,566 |
| L22 | 1,61664 | 44,27 | 2,5 | -191,864 |
| G2 |  |  |  | -739,655 |
| L31 | 1,83935 | 37,04 | 4,2 | 29,918 |
| L32 | 1,80832 | 46,25 | 1 | -21,37 |
| G3 |  |  |  | -80,053 |
| L41 | 1,48914 | 70,23 | 1,2 | -34,35 |
| L42 | 1,81266 | 25,16 | 4 | 43,47 |
| L43 | 1,48914 | 70,23 | 1,2 | -33,82 |
| G4 |  |  |  | -27,37 |
| G5 |  |  |  | 20,24 |

Die Angabe der Brennweite für die Linsengruppe G5 bezieht sich dabei auf die maximale Vergrößerungseinstellung der Teleskopoptik 1.

Tabelle 6:

| m | r / mm | d / mm | Glas |
|---|---|---|---|
| 1 | 98,259 | 7,10 | FCD1 |
| 2 | -268,367 | 0,3 | |
| 3 | 78,962 | 9,2 | FCD1 |
| 4 | -108,957 | 1 | |
| 5 | -104,062 | 3,5 | N-KZFS4 |
| 6 | 143,262 | 17,6 | |
| 7 | 170,471 | 4,3 | N-F2 |
| 8 | -5200,05 | 2,5 | N-KZFS4 |
| 9 | 121,087 | 37,5 | |
| 10 | 168,526 | 4,2 | N-LASF40 |
| 11 | -29,1733 | 1 | N-LASF44 |
| 12 | 42,9948 | 27,748 | |
| 13 | Infinity | 28,498 | N-BAK4 |
| 14 | Infinity | 1 | |
| 15 | Infinity | 44,882 | N-BAK4 |
| 16 | Infinity | 13,6 | |
| 17 | Infinity | 2 | N-BK7 |
| 18 | Infinity | 8,226 | |
| 19 | -13,152 | 1,2 | N-FK5 |
| 20* | -33,999 | 0,22 | |
| 21 | -40,287 | 4 | N-SF6 |
| 22 | -19,66 | 1,2 | N-FK5 |
| 23 | 106,35 | 26,45 | |
| 24 | Infinity | 8,2 | |
| 25 | -66,05 | 3,9 | N-LAK33 |
| 26 | -32 | 0,3 | |
| 27 | 45,566 | 14,4 | N-PSK3 |
| 28 | -19,793 | 1,2 | N-SF57 |
| 29 | -56,22 | 0,5 | |
| 30 | 111,14 | 5,2 | N-LAK33 |
| 31 | -77 | 0,5 | |
| 32 | 29,78 | 5 | N-SK5 |
| 33 | 445,58 | 17,8 | |

Die Oberfläche 20 ist wiederum eine asphärische Oberfläche.

In der Tabelle 7 sind die Daten der wirksamen Oberflächen der Linsen der Teleskopoptik 1 für die minimale Vergrößerungseinstellung, d.h. für 17,51-fache Vergrößerung angegeben.

Tabelle 7:

| m | r / mm | d / mm | Glas |
|---|---|---|---|
| 1 | 98,259 | 7,1 | FCD1 |
| 2 | -268,367 | 0,3 | |
| 3 | 78,962 | 9,2 | FCD1 |
| 4 | -108,957 | 1 | |
| 5 | -104,062 | 3,5 | N-KZFS4 |
| 6 | 143,262 | 17,58 | |
| 7 | 170,471 | 4,3 | N-F2 |
| 8 | -5200,05 | 2,5 | N-KZFS4 |
| 9 | 121,087 | 37,52 | |
| 10 | 168,526 | 4,2 | N-LASF40 |
| 11 | -29,1733 | 1 | N-LASF44 |
| 12 | 42,9948 | 27,748 | |
| 13 | Infinity | 28,498 | N-BAK4 |
| 14 | Infinity | 1 | |
| 15 | Infinity | 44,882 | N-BAK4 |
| 16 | Infinity | 13,6 | |
| 17 | Infinity | 2 | N-BK7 |
| 18 | Infinity | 14,538 | |
| 19 | -13,152 | 1,2 | N-FK5 |
| 20* | -33,999 | 0,22 | |
| 21 | -40,287 | 4 | N-SF6 |
| 22 | -19,66 | 1,2 | N-FK5 |
| 23 | 106,35 | 7,05 | |
| 24 | Infinity | 5,25 | |
| 25 | -66,05 | 3,9 | N-LAK33 |
| 26 | -32 | 0,3 | |
| 27 | 45,566 | 14,4 | N-PSK3 |
| 28 | -19,793 | 1,2 | N-SF57 |
| 29 | -56,22 | 0,5 | |
| 30 | 111,14 | 5,2 | N-LAK33 |
| 31 | -77 | 16,541 | |
| 32 | 29,78 | 5 | N-SK5 |
| 33 | 445,58 | 18,36 | |

In der Tabelle 8 sind Brennweiten bzw. Gesamtbrennweiten von Teilsystemen der Teleskopoptik 1 aufgelistet.

Tabelle 8:

| | | f' / mm |
|---|---|---|
| Objektiv-Gesamtbrennweite bei minimaler Vergrößerung | f'(G1,G2,G3,G4) min | 457,2 |

(fortgesetzt)

|  |  | f' / mm |
|---|---|---|
| Objektiv-Gesamtbrennweite bei maximaler Vergrößerung | f'(G1,G2,G3,G4) max | 680,751 |
| Okularbrennweite bei minimaler Vergrößerung | f'(G5) min | 26,07 |
| Okularbrennweite bei maximaler Vergrößerung | f'(G5) max | 20,24 |
| Brennweite der Gruppen G1+G2 | f'(G1,G2) | 133,561 |
| Brennweite der Gruppen G1+G2+G3 | f'(G1,G2,G3) | 319,378 |

Bei diesem zweiten Ausführungsbeispiel der Teleskopoptik 1 hat die für die Bildstabilisierung verwendete Linsengruppe G3 eine betragsmäßig geringere Brennweite als im ersten Beispiel. Die Brennweite der Linsengruppe G3 hat in diesem Fall einen Wert von f'(G3) = - 80,053 mm. Bei einem Verkippen der Teleskopoptik 1 gemäß diesem Ausführungsbeispiel kann eine Bildstabilisierung durch eine laterale Versetzung der Linsengruppe G3 mit einem Wert von 4,163 mm/° erreicht werden.

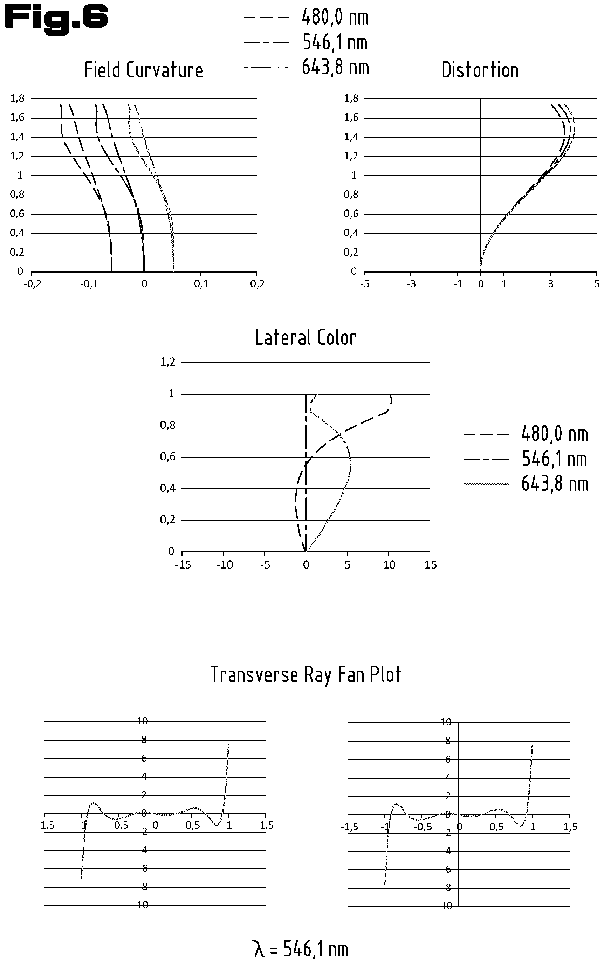

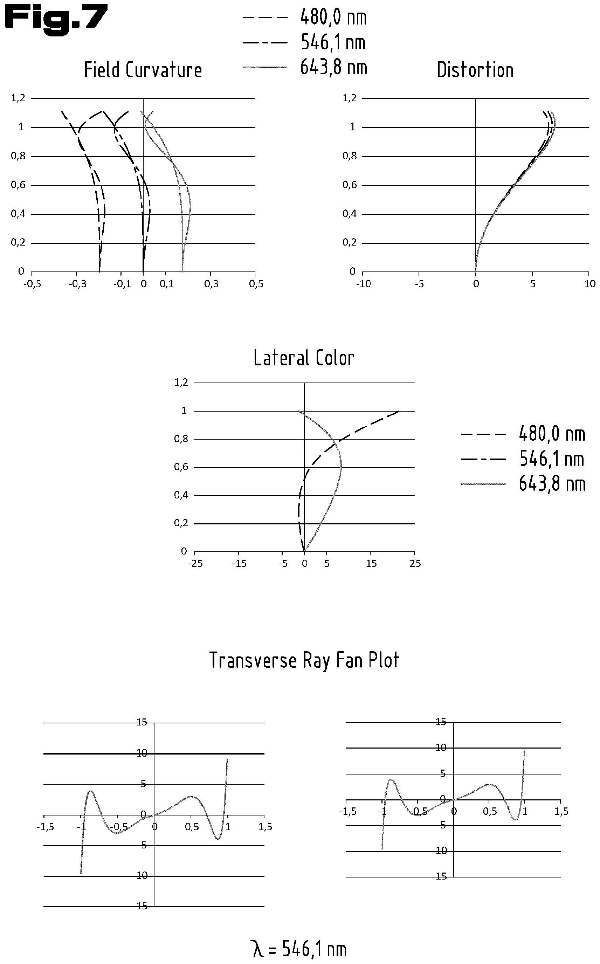

Die Fig. 6 und 7 zeigen die Abbildungsfehler der Teleskopoptik 1 zu der minimalen und zu der maximalen Vergrößerung, dargestellt in Diagrammen für die Bildfeldwölbung, die Verzeichnung, den Farbsaumfehler und den Öffnungsfehler.

Beispiel 3:

In der Tabelle 9 sind die Daten der Linsen bzw. der Linsengruppe der Teleskopoptik 1 für ein drittes Ausführungsbeispiel aufgelistet.

Die Glassorten der Einzellinsen und die Abstände d als auch die Krümmungsradien r der einzelnen optischen Oberflächen für die maximale Vergrößerungseinstellung, 33,66-fach, sind in der Tabelle 10 aufgelistet.

Tabelle 9:

|  | ne | ve | d / mm | f' / mm |
|---|---|---|---|---|
| L11 | 1,49845 | 81,2 | 5,7 | 192,63 |
| L12 | 1,49845 | 81,2 | 8,8 | 116,144 |
| L13 | 1,61664 | 44,27 | 3,5 | -117,615 |
| G1 |  |  |  | 169,056 |
| L21 | 1,62408 | 36,16 | 4,3 | 174,977 |
| L22 | 1,61664 | 44,27 | 2,5 | -131,781 |
| G2 |  |  |  | -563,417 |
| L31 | 1,83935 | 37,04 | 4,2 | 45,053 |
| L32 | 1,80832 | 46,25 | 1 | -37,239 |
| G3 |  |  |  | -240,006 |
| L41 | 1,48914 | 70,23 | 1,2 | -34,35 |
| L42 | 1,81266 | 25,16 | 4 | 43,47 |
| L43 | 1,48914 | 70,23 | 1,2 | -33,82 |
| G4 |  |  |  | -27,37 |
| G5 |  |  |  | 20,24 |

Die Angabe der Brennweite für die Linsengruppe G5 bezieht sich dabei auf die maximale Vergrößerungseinstellung der Teleskopoptik 1.

Tabelle 10:

| m | r / mm | d / mm | Glas |
|---|---|---|---|
| 1 | 134,986 | 5,70 | FCD1 |
| 2 | -327,919 | 0,3 | |
| 3 | 99,622 | 8,8 | FCD1 |
| 4 | -134,1435 | 1 | |
| 5 | -131,4756 | 3,5 | N-KZFS4 |
| 6 | 163,3985 | 38,92 | |
| 7 | 220,395 | 4,3 | N-F2 |
| 8 | -214,816 | 2,5 | N-KZFS4 |
| 9 | 131,285 | 37,5 | |
| 10 | 143,693 | 4,2 | N-LASF40 |
| 11 | -50,6358 | 1 | N-LASF44 |
| 12 | 74,879 | 50,505 | |
| 13 | Infinity | 28,498 | N-BAK4 |
| 14 | Infinity | 1 | |
| 15 | Infinity | 44,882 | N-BAK4 |
| 16 | Infinity | 13,6 | |
| 17 | Infinity | 2 | N-BK7 |
| 18 | Infinity | 8,226 | |
| 19 | -13,152 | 1,2 | N-FK5 |
| 20* | -33,999 | 0,22 | |
| 21 | -40,287 | 4 | N-SF6 |
| 22 | -19,66 | 1,2 | N-FK5 |
| 23 | 106,35 | 26,45 | |
| 24 | Infinity | 8,2 | |
| 25 | -66,05 | 3,9 | N-LAK33 |
| 26 | -32 | 0,3 | |
| 27 | 45,566 | 14,4 | N-PSK3 |
| 28 | -19,793 | 1,2 | N-SF57 |
| 29 | -56,22 | 0,5 | |
| 30 | 111,14 | 5,2 | N-LAK33 |
| 31 | -77 | 0,5 | |
| 32 | 29,78 | 5 | N-SK5 |
| 33 | 445,58 | 17,68 | |

In Tabelle 11 sind die entsprechenden Oberflächendaten der Linsen bzw. Umlenkprismen für die minimale Vergrößerung, 17,46-fach, aufgelistet.

Tabelle 11:

| m | r / mm | d / mm | Glas |
|---|---|---|---|
| 1 | 134,99 | 5,70 | FCD1 |
| 2 | -327,919 | 0,3 | |
| 3 | 99,622 | 8,8 | FCD1 |
| 4 | -134,1435 | 1 | |
| 5 | -131,4756 | 3,5 | N-KZFS4 |
| 6 | 163,3985 | 38,905 | |
| 7 | 220,395 | 4,3 | N-F2 |
| 8 | -214,816 | 2,5 | N-KZFS4 |
| 9 | 131,285 | 37,518 | |
| 10 | 143,693 | 4,2 | N-LASF40 |
| 11 | -50,6358 | 1 | N-LASF44 |
| 12 | 74,879 | 50,505 | |
| 13 | Infinity | 28,498 | N-BAK4 |
| 14 | Infinity | 1 | |
| 15 | Infinity | 44,882 | N-BAK4 |
| 16 | Infinity | 13,6 | |
| 17 | Infinity | 2 | N-BK7 |
| 18 | Infinity | 14,538 | |
| 19 | -13,15 | 1,2 | N-FK5 |
| 20* | -34,00 | 0,22 | |
| 21 | -40,29 | 4 | N-SF6 |
| 22 | -19,66 | 1,2 | N-FK5 |
| 23 | 106,35 | 7,05 | |
| 24 | Infinity | 5,25 | |
| 25 | -66,05 | 3,9 | N-LAK33 |
| 26 | -32,00 | 0,3 | |
| 27 | 45,57 | 14,4 | N-PSK3 |
| 28 | -19,79 | 1,2 | N-SF57 |
| 29 | -56,22 | 0,5 | |
| 30 | 111,14 | 5,2 | N-LAK33 |
| 31 | -77,00 | 16,541 | |
| 32 | 29,78 | 5 | N-SK5 |
| 33 | 445,58 | 18,38 | |

Tabelle 12 enthält die Brennweiten bzw. die Gesamtbrennweiten von Teilsystemen der Teleskopoptik 1.

Tabelle 12:

| | | f' / mm |
|---|---|---|
| Objektiv-Gesamtbrennweite bei minimaler Vergrößerung | f'(G1,G2,G3,G4)$_{min}$ | 455,574 |

(fortgesetzt)

| | | f' / mm |
|---|---|---|
| Objektiv-Gesamtbrennweite bei maximaler Vergrößerung | f'(G1,G2,G3,G4)$_{max}$ | 678,684 |
| Okularbrennweite bei minimaler Vergrößerung | f'(G5)$_{min}$ | 26,07 |
| Okularbrennweite bei maximaler Vergrößerung | f'(G5)$_{max}$ | 20,24 |
| Brennweite der Gruppen G1+G2 | f'(G1,G2) | 205,854 |
| Brennweite der Gruppen G1+G2+G3 | f'(G1,G2,G3) | 318,429 |

Bei der Teleskopoptik 1 gemäß diesem dritten Ausführungsbeispiel kann die Vergrößerung zwischen 17,46-fach und 33,66-fach verändert werden. Bei der minimalen Vergrößerung wird ein objektives Sehfeld von 3,49° und ein entsprechendes subjektives Sehfeld von 57,57° erreicht. Bei der maximalen Vergrößerung ist ein objektives Sehfeld von 2,23° und ein subjektives Sehfeld von 69,64° erreichbar.

Die bildstabilisierende Funktion der Linsengruppe G3 wird erreicht durch einen Wert von 10,546 mm/° laterale Verschiebung der Linsengruppe G3.

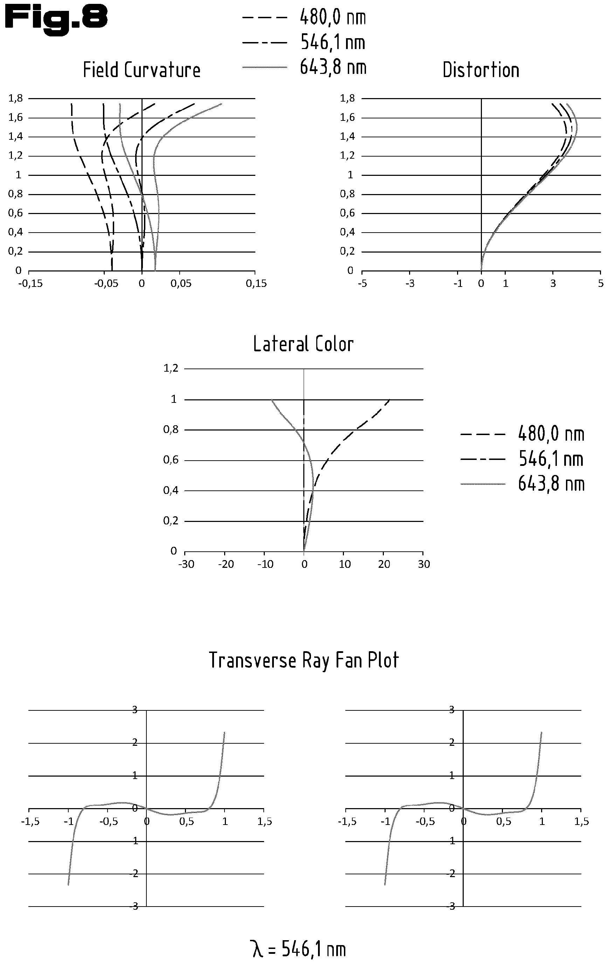

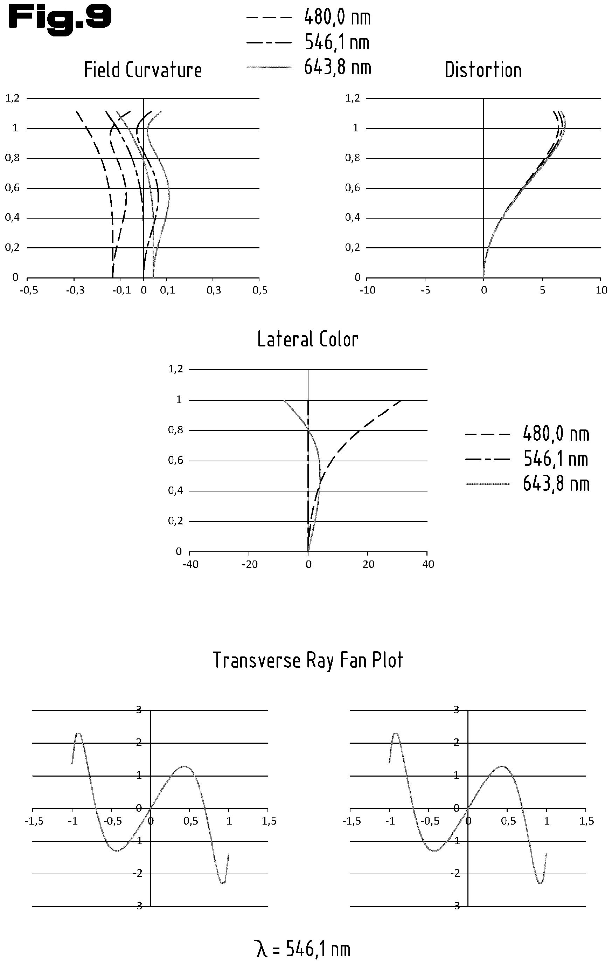

Die Fig. 8 und 9 zeigen die Abbildungsfehler des Linsensystems der Teleskopoptik 1 gemäß diesem dritten Ausführungsbeispiel, dargestellt in Diagrammen für die Bildfeldwölbung, die Verzeichnung, den Farbquerfehler bzw. die chromatische Aberration und den Öffnungsfehler.

Beispiel 4:

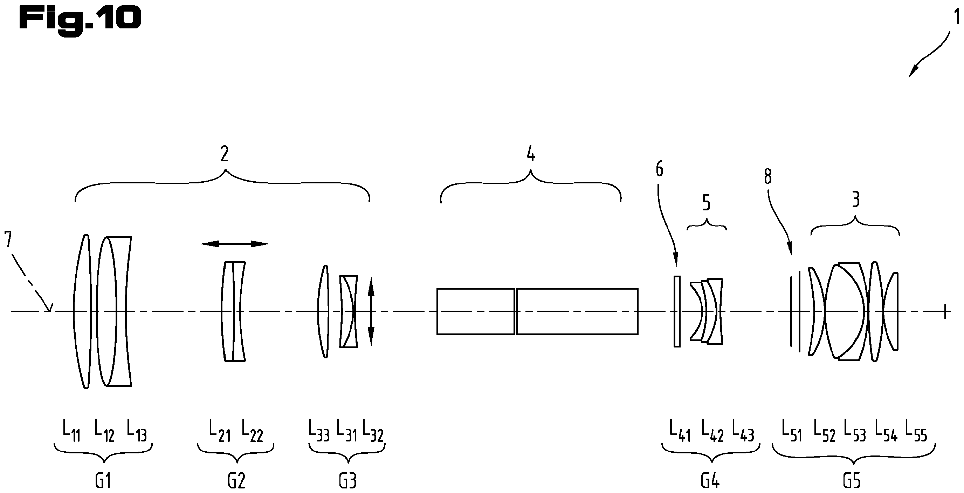

Anhand der Fig. 10 wird ein viertes Ausführungsbeispiel beschrieben. In der Darstellung ist das gesamte Linsensystem der Teleskopoptik 1 wiedergegeben. Bei dieser ist nun für die Ausbildung der Linsengruppe G3 vorgesehen, dass sie eine dritte Einzellinse, und zwar die mit L33 bezeichnete Linse, umfasst. Die Linse L33 wird vorzugsweise durch eine bikonvexe Linse, also eine Linse mit positiver Brechkraft, gebildet. Sie ist außerdem in dem Strahlengang bzw. dem Linsensystem der Teleskopoptik 1 feststehend angeordnet. Im Unterschied zu den vorstehend beschriebenen Ausführungsbeispielen kann nun die negative Brechkraft der durch die Linsen L31 und L32 gebildeten Teil-Linsengruppe von G3 mit einer (betragsmäßig) größeren Brechkraft ausgebildet sein, wodurch das Ausmaß des maximal möglichen Auslenkungsbereichs vergrößert wird. Insgesamt wird dabei eine noch größere bildstabilisierende Wirkung erreicht. Die durch die Linsen L31 und L32 gebildete Teil-Linsengruppe von G3 ist lateral verstellbar und weist vorzugsweise eine Brennweite von f'(L31, L32) = -51,2 mm auf.

Weiters ist bei dem Objektivlinsensystems 2 dieses Ausführungsbeispiels vorgesehen, dass die Linsen L12 und L13 der ersten Linsengruppe G1 durch ein Kittglied gebildet werden. Bei der zweiten Linsengruppe G2 des Objektivlinsensystems 2 wird ebenfalls ein Kittglied verwendet. Und zwar sind beide Linsen, die Linse L21 und die Linse L22, durch eine konvex-konkave Linse gebildet (nicht dargestellt).

In der Tabelle 15 sind die Daten der Linsen bzw. der Linsengruppe der Teleskopoptik 1 für dieses vierte Ausführungsbeispiel aufgelistet.

Die Glassorten der Einzellinsen und die Abstände d als auch die Krümmungsradien r der einzelnen optischen Oberflächen für die maximale Vergrößerungseinstellung, 39,51-fach, sind in der Tabelle 16 aufgelistet.

Tabelle 15:

| | ne | ve | d / mm | f' / mm |
|---|---|---|---|---|
| L11 | 1,49845 | 81,2 | 6,2 | 186,424 |
| L12 | 1,49845 | 81,2 | 8,9 | 111,081 |
| L13 | 1,65569 | 44,67 | 3,5 | -115,54 |
| G1 | | | | 158,084 |
| L21 | 1,65222 | 33,56 | 2,7 | 428,627 |
| L22 | 1,62068 | 49,54 | 2,5 | 1250,23 |
| G2 | | | | -636,614 |
| L33 | 1,49845 | 81,2 | 3,1 | 106,791 |

(fortgesetzt)

|  | ne | ve | d / mm | f' / mm |
|---|---|---|---|---|
| L31 | 1,62408 | 36,16 | 4,4 | 33,286 |
| L32 | 1,62068 | 49,54 | 1 | -19,981 |
| G3 |  |  |  | -125,6 |
| L41 | 1,81266 | 25,16 | 4,6 | 57,876 |
| L42 | 1,48914 | 70,23 | 1 | -29,389 |
| L43 | 1,79195 | 47,25 | 7 | 54,177 |
| G4 |  |  |  | -19,779 |
| G5 |  |  |  | 21,707 |

Die Angabe der Brennweite für die Linsengruppe G5 bezieht sich dabei auf die maximale Vergrößerungseinstellung der Teleskopoptik 1.

Tabelle 16:

| m | r / mm | d / mm | Glas |
|---|---|---|---|
| 1 | 142,8 | 6,2 | FCD1 |
| 2 | -262,2 | 0,3 |  |
| 3 | 82,538 | 8,9 | FCD1 |
| 4 | -162,17 | 3,5 | N-BAF51 |
| 5 | 143,39 | 33,5 |  |
| 6 | 205,8 | 2,7 | N-SF2 |
| 7 | 775,99 | 2,5 | N-SSK8 |
| 8 | 130,75 | 42,5 |  |
| 9 | 64,59 | 3,1 | FCD1 |
| 10 | -297,82 | 7 |  |
| 11 | 1060,73 | 4,4 | N-F2 |
| 12 | -21,154 | 1 | N-SSK8 |
| 13 | 30,517 | 10 |  |
| 14 | Infinity | 32,321 | N-BAK4 |
| 15 | Infinity | 1,8 |  |
| 16 | Infinity | 56,528 | N-BAK4 |
| 17 | Infinity | 5 |  |
| 18 | Infinity | 2 | N-BK7 |
| 19 | Infinity | 9,01 |  |
| 20* | -13,152 | 1,2 | S-FPL51* |
| 21 | -39 | 4,2 |  |
| 22 | -19,692 | 4,6 | N-SF6 |
| 23 | -15,334 | 1 | N-FK5 |
| 24 | 234,9 | 26,599 |  |
| 25 | Infinity | 8,85 |  |

(fortgesetzt)

| m | r / mm | d / mm | Glas |
|---|---|---|---|
| 26 | -342,64 | 7 | N-LAF21 |
| 27 | -38,475 | 0,3 | |
| 28 | 132,87 | 14,5 | N-SK5 |
| 29 | -22,593 | 1,2 | E-FDS1 |
| 30 | -67,277 | 0,3 | |
| 31 | 74,127 | 7,7 | N-LAK33A |
| 32 | -77,338 | 0,5 | |
| 33 | 29,28 | 4,8 | N-SK5 |
| 34 | 99,06 | 18,56 | |
| 35 | Auge | | |

In Tabelle 17 sind die entsprechenden Oberflächendaten der Linsen bzw. Umlenkprismen für die minimale Vergrößerung, 16,52-fach, aufgelistet.

Tabelle 17:

| m | r / mm | d / mm | Glas |
|---|---|---|---|
| 1 | 142,8 | 6,2 | FCD1 |
| 2 | -262,2 | 0,3 | |
| 3 | 82,538 | 8,9 | FCD1 |
| 4 | -162,17 | 3,5 | N-BAF51 |
| 5 | 143,39 | 33,5 | |
| 6 | 205,8 | 2,7 | N-SF2 |
| 7 | 775,99 | 2,5 | N-SSK8 |
| 8 | 130,75 | 42,5 | |
| 9 | 64,59 | 3,1 | FCD1 |
| 10 | -297,82 | 7 | |
| 11 | 1060,73 | 4,4 | N-F2 |
| 12 | -21,154 | 1 | N-SSK8 |
| 13 | 30,517 | 10 | |
| 14 | Infinity | 32,321 | N-BAK4 |
| 15 | Infinity | 1,8 | |
| 16 | Infinity | 56,528 | N-BAK4 |
| 17 | Infinity | 5 | |
| 18 | Infinity | 2 | N-BK7 |
| 19 | Infinity | 14,688 | |
| 20* | -13,152 | 1,2 | S-FPL51 * |
| 21 | -39 | 4,2 | |
| 22 | -19,692 | 4,6 | N-SF6 |
| 23 | -15,334 | 1 | N-FK5 |

(fortgesetzt)

| m | r / mm | d / mm | Glas |
|---|---|---|---|
| 24 | 234,9 | 7,731 | |
| 25 | Infinity | 0,55 | |
| 26 | -342,64 | 7 | N-LAF21 |
| 27 | -38,475 | 0,3 | |
| 28 | 132,87 | 14,5 | N-SK5 |
| 29 | -22,593 | 1,2 | E-FDS1 |
| 30 | -67,277 | 0,3 | |
| 31 | 74,127 | 7,7 | N-LAK33A |
| 32 | -77,338 | 21,988 | |
| 33 | 29,28 | 4,8 | N-SK5 |
| | 99,06 | 19,96 | |
| | Auge | | |

Tabelle 18 enthält die Brennweiten bzw. die Gesamtbrennweiten von Teilsystemen der Teleskopoptik 1.

Tabelle 18:

| | | f' / mm |
|---|---|---|
| Objektiv-Gesamtbrennweite bei minimaler Vergrößerung | $f'(G1,G2,G3,G4)_{min}$ | 480,949 |
| Objektiv-Gesamtbrennweite bei maximaler Vergrößerung | $f'(G1,G2,G3,G4)_{max}$ | 866,157 |
| Okularbrennweite bei minimaler Vergrößerung | $f'(G5)_{min}$ | 28,8 |
| Okularbrennweite bei maximaler Vergrößerung | $f'(G5)_{max}$ | 21,707 |
| Brennweite der Gruppen G1+G2 | $f'(G1,G2)$ | 186,954 |
| Brennweite der Gruppen G1+G2+G3 | $f'(G1,G2,G3)$ | 310,344 |

Bei der Teleskopoptik 1 gemäß diesem vierten Ausführungsbeispiel kann die Vergrößerung zwischen 16,52-fach und 39,51-fach verändert werden. Bei der minimalen Vergrößerung wird ein objektives Sehfeld von 3,53° und ein entsprechendes subjektives Sehfeld von 56,9° erreicht. Bei der maximalen Vergrößerung ist ein objektives Sehfeld von 1,94° und ein subjektives Sehfeld von 70,8° erreichbar.

Die bildstabilisierende Funktion der die beiden Linsen L31, L32 umfassenden Linsengruppe wird erreicht durch einen Wert der spezifischen lateralen Verschiebung von 2,888 mm/°.

Ergänzend kann noch hinzugefügt werden, dass zur bildstabilisierenden Wirkung teilweise auch die an den Flächen des Prismen-Umkehrsystems 4 erfolgenden Reflexionen der Lichtstrahlen beitragen. Dies, da ein Verschwenken eines an einer Fläche reflektierten Lichtstrahl eine Verdopplung des Ablenkungswinkels in Relation zu dem Schwenkwinkel bewirkt. In den Fig. 1, 3 und 10 wurden ja vereinfachend die Strahlengänge in entfalteter Weise dargestellt. Tatsächlich muss aber die Wirkung durch die Reflexionen mitberücksichtigt werden. Die zum Erreichen einer Bildstabilisierung erforderliche laterale Verschiebung der Linsengruppe G3 bzw. der beiden Linsen L31, L32 (im vierten Ausführungsbeispiel) kann daher geringer sein, als ohne die reflektierende Wirkung der Prismen nötig wäre.

Die Tabelle 13 enthält eine Auflistung bzw. eine Gegenüberstellung der Brennweiten der Linsengruppe G3 und der Werte der spezifischen lateralen Verschiebung zur Bildstabilisierung zu den beschriebenen Beispielen der Teleskopoptik 1. Dabei sind die Beispiele 1 bis 3 in aufsteigender Reihenfolge des Betrags der Brennweite der Linsengruppe G3, f'(G3) gereiht. In der vierten Spalte der Tabelle sind Werte des Verhältnisses aus spezifischer lateraler Verschiebung zur Bildstabilisierung und der Brennweite der Linsengruppe G3, c(G3) bzw. der lateral verstellbaren Linsengruppe L31, L32, angegeben. Die fünfte Spalte enthält schließlich noch Werte des Verhältnisses der Brennweite der ersten Linsengruppe G1 und der Brennweite der zweiten Linsengruppe G2, f'(G1) / f'(G2).

Tabelle 13:

| Beispiel | f'(G3) [mm] | Spezifische Verschiebung [mm / °] | c(G3) [$10^{-3}$ / °] | f'(G1) / f'(G2) |
|---|---|---|---|---|
| 2 | -80,053 | 4,163 | -52,0 | -0,164 |
| 1 | -120,7 | 6,02 | -49,9 | -0,249 |
| 3 | -240,006 | 10,546 | -43,9 | -0,300 |
| | f'(L31,L32) [mm] | Spez. Versch. der Gruppe L31, L32 [mm / °] | | |
| 4 | -51,2 | 1,39 | -27,1 | -0,248 |

Als besonders vorteilhaft erweist sich eine Teleskopoptik 1 deren Wert des Verhältnisses aus spezifischer lateraler Verschiebung zur Bildstabilisierung und der Brennweite der Linsengruppe G3 bzw. der lateral verstellbaren Linsengruppe L31, L32 (beim vierten Ausführungsbeispiel) in einem Bereich zwischen -52 $\times 10^{-3}$ /° und -25 $\times 10^{-3}$ /° und liegt. Günstig erweist sich auch, wenn ein Verhältnis der Brennweite der ersten Linsengruppe G1 und der Brennweite der zweiten Linsengruppe G2 in einem Bereich von -0,30 bis -0,16 liegt.

Der Tabelle 14 können weitere charakteristische Brennweitenverhältnisse des Objektivlinsensystems 2 entnommen werden. Dabei sind die Beispiele ebenfalls wieder in aufsteigender Reihenfolge des Betrags der Brennweite der Linsengruppe G3 aufgelistet (zweite Spalte). Die dritte Spalte enthält die Gesamtlänge der Teleskopoptik 1, d.h. den jeweiligen Wert der Summe aller Abstände "d" aufeinanderfolgender Oberflächen m = 1 bis m = 32 (z.B. Tabelle 1, dritte Spalte). In der vierten Spalte sind die jeweiligen Werte der Verhältnisse aus der Brennweite der ersten Linsengruppe G1 und der Brennweite der dritten Linsengruppe G3 angegeben. Die fünfte Spalte enthält die Werte der Verhältnisse aus der Brennweite der zweiten Linsengruppe G2 und der Brennweite der dritten Linsengruppe G3. In der sechsten Spalte sind schließlich die Werte der Verhältnisse aus der Brennweite der dritten Linsengruppe G3 und der Gesamtbrennweite des aus der ersten Linsengruppe G1 und der zweiten Linsengruppe G2 gebildeten Linsensystems angegeben.

Tabelle 14:

| Beispiel | f'(G3) [mm] | Gesamtlänge [mm] | f'(G1) / f'(G3) | f'(G2) / f'(G3) | f'(G3) / f'(G1,G2) |
|---|---|---|---|---|---|
| 2 | -80,053 | 286,42 | -1,511 | 9,240 | -0,599 |
| 1 | -120,7 | 304,87 | -1,186 | 4,754 | -0,732 |
| 3 | -240,006 | 328,70 | -0,704 | 2,348 | -1,166 |
| 4 | -125,6 | 333,57 | -1,259 | 5,069 | -0,670 |

Von Benutzern werden im Allgemeinen Teleskope mit kürzerer Gesamtbaulänge bevorzugt. Als vorteilhaft erweisen sich folglich Teleskopoptiken 1 mit Brennweiten bzw. mit Brennweitenverhältnissen der ersten Linsengruppe G1 zu der dritten Linsengruppe G3 aus einem Wertebereich zwischen -1,511 und -0,704 und mit Brennweitenverhältnissen der zweiten Linsengruppe G2 zu der dritten Linsengruppe G3 aus einem Wertebereich zwischen 2,348 und 9,240. D.h. wenn die Bedingungen -1,511 < f'(G1) / f'(G3) < -0,704 und 2,348 < f'(G2) / f'(G3) < 9,240 erfüllt werden. Vorzugsweise wird die Teleskopoptik 1 mit Brennweiten f'(G1), f'(G2) und f'(G3) aufgebaut, die die Bedingungen -1,5 < f'(G1) / f'(G3) < -1,2 und 5 < f'(G2) / f'(G3) < 9 erfüllen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

## Bezugszeichenaufstellung

1    Teleskopoptik
2    Objektivlinsensystem
3    Okularlinsensystem
4    Prismen-Umkehrsystem
5    Feldlinse
6    Deckglas
7    Optische Achse
8    Bildebene

## Patentansprüche

1. Teleskopoptik (1) für ein Beobachtungsfernrohr mit einem Objektivlinsensystem (2), mit einem Prismen-Umkehrsystem (4) und mit einem Okularlinsensystem (3), wobei ein von dem Objektivlinsensystem (2) erzeugtes Bild (8) eines Gegenstands zwischen dem Prismen-Umkehrsystem (4) und dem Okularlinsensystem (3) liegt, und wobei das Objektivlinsensystem (2), in einer objektseitig beginnenden Reihenfolge, eine erste Linsengruppe G1 mit einer positiven Brechkraft, eine zweite Linsengruppe G2 mit einer negativen Brechkraft und eine dritte Linsengruppe G3 mit zumindest einer Linse mit negativer Brechkraft umfasst, und wobei die zweite Linsengruppe G2 zum Fokussieren parallel zu einer optischen Achse (7) verstellbar ist, und wobei zumindest eine Linse mit negativer Brechkraft der dritten Linsengruppe G3 zur Veränderung der Lage des Bildes (8) senkrecht zu der optischen Achse (7) verstellbar ist, wobei die dritte Linsengruppe G3 eine negative Brechkraft aufweist, **dadurch gekennzeichnet, dass** die Brennweite der ersten Linsengruppe f'(G1), die Brennweite der zweiten Linsengruppe f'(G2) und die Brennweite der dritten Linsengruppe f'(G3) die Bedingungen -1,511 < f'(G1) / f'(G3) < -0,704 und 2,348 < f'(G2) / f'(G3) < 9,240 erfüllen.

2. Teleskopoptik nach Anspruch 1, **dadurch gekennzeichnet, dass** der Wert eines Verhältnisses aus einer spezifischen lateralen Verschiebung der zumindest einen Linse mit negativer Brechkraft der dritten Linsengruppe G3 zur Bildstabilisierung und einer Brennweite der dritten Linsengruppe G3 in einem Bereich zwischen $-52 \times 10^{-3}$ /° und $-25 \times 10^{-3}$ /° liegt, wobei die spezifische laterale Verschiebung der zumindest einen Linse mit negativer Brechkraft der dritten Linsengruppe G3 zur Bildstabilisierung definiert ist durch die auf die Winkeleinheit bezogene laterale Verschiebung der zumindest einen Linse mit negativer Brechkraft der dritten Linsengruppe G3 in Bezug auf eine Verkippung der optischen Achse (7).

3. Teleskopoptik nach Anspruch 1 oder 2, **dadurch gekennzeichnet, dass** ein Verhältnis aus einer Brennweite der ersten Linsengruppe G1 und einer Brennweite der zweiten Linsengruppe G2 einen Wert hat, der in einem Bereich zwischen -0,30 und -0,16 liegt (-0,30 < f'(G1) / f'(G2) < -0,16).

4. Teleskopoptik nach einem der vorhergehenden Ansprüche, **dadurch gekennzeichnet, dass** ein Verhältnis aus der Brennweite der dritten Linsengruppe G3 und der Brennweite des aus der ersten Linsengruppe G1 und der zweiten Linsengruppe G2 gebildeten Linsensystems einen Wert hat, der in einem Bereich zwischen -1,17 und -0,60 liegt (-1,17 < f'(G3) / f'(G1,G2) < -0,60).

5. Teleskopoptik nach einem der vorhergehenden Ansprüche, **dadurch gekennzeichnet, dass** die erste Linsengruppe G1 des Objektivlinsensystems (2), in objektseitig beginnender Reihenfolge, eine erste Linse L11 mit einer positiven Brechkraft, eine zweite Linse L12 mit einer positiven Brechkraft und eine dritte Linse L13 mit einer negativen Brechkraft umfasst.

6. Teleskopoptik nach einem der vorhergehenden Ansprüche, **dadurch gekennzeichnet, dass** die erste Linsengruppe G1 des Objektivlinsensystems (2), in objektseitig beginnender Reihenfolge, eine bikonvexe Linse L11, eine bikonvexe Linse L12 und eine bikonkave Linse L13 umfasst.

7. Teleskopoptik nach einem der vorhergehenden Ansprüche, **dadurch gekennzeichnet, dass** die Linsen L12 und L13 der ersten Linsengruppe G1 des Objektivlinsensystems (2) ein Kittglied bilden.

8. Teleskopoptik nach einem der vorhergehenden Ansprüche, **dadurch gekennzeichnet, dass** die zweite Linsengruppe G2 des Objektivlinsensystems (2) eine konvexe Fläche in Richtung Objektiv und eine konkave Fläche in Richtung Okular aufweist.

9. Teleskopoptik nach einem der vorhergehenden Ansprüche, **dadurch gekennzeichnet, dass** die zweite Linsengruppe G2 des Objektivlinsensystems (2), in objektseitig beginnender Reihenfolge, ein Kittglied mit einer bikonvexen Linse L21 und mit einer bikonkaven Linse L22 umfasst.

10. Teleskopoptik nach einem der Ansprüche 1 bis 8, **dadurch gekennzeichnet, dass** die zweite Linsengruppe G2 des Objektivlinsensystems (2), in objektseitig beginnender Reihenfolge, ein Kittglied mit einer konvex-konkaven Linse L21 und mit einer konvex-konkaven Linse L22 umfasst.

11. Teleskopoptik nach einem der vorhergehenden Ansprüche, **dadurch gekennzeichnet, dass** die zumindest eine Linse mit negativer Brechkraft der dritten Linsengruppe G3 des Objektivlinsensystems (2), in objektseitig beginnender Reihenfolge, als ein Kittglied mit einer konkav-konvexen Linse L31 und der bikonkaven Linse L32 ausgebildet ist.

12. Teleskopoptik nach Anspruch 11, **dadurch gekennzeichnet, dass** die dritte Linsengruppe G3 des Objektivlinsensystems (2), in objektseitig beginnender Reihenfolge, eine Linse L33 mit positiver Brechkraft, bevorzugt ausgebildet als eine bikonvexe Linse, und das Kittglied mit negativer Brechkraft umfasst.

13. Teleskopoptik nach einem der vorhergehenden Ansprüche, **dadurch gekennzeichnet, dass** eine Feldlinse (5) als eine vierte Linsengruppe G4 ausgebildet ist, wobei die vierte Linsengruppe G4, in objektseitig beginnender Reihenfolge, eine konkav-konvexe Linse L41 und ein Kittglied aus einer konkav-konvexen Linse L42 und einer bikonkaven Linse L43 umfasst.

14. Teleskopoptik nach einem der vorhergehenden Ansprüche, **dadurch gekennzeichnet, dass** das Okularlinsensystem (3) eine fünfte Linsengruppe G5 umfasst, wobei die fünfte Linsengruppe G5, in objektseitig beginnender Reihenfolge, eine konkav-konvexe Linse L51, ein Kittglied aus einer bikonvexen Linse L52 und einer konkav-konvexen Linse L53, eine bikonvexe Linse L54 und eine konvex-konkave Linse L55 umfasst.

15. Teleskopoptik nach Anspruch 14, **dadurch gekennzeichnet, dass** die vierte Linsengruppe G4 und die Linsen L51, L52, L53 und L54 der fünften Linsengruppe G5 in axialer Richtung, entsprechend der optischen Achse (7), verschiebbar ausgebildet sind.

**Claims**

1. A telescope optics (1) for a telescopic observational instrument having an objective lens system (2), having a prism erecting system (4) and having an eyepiece lens system (3), wherein an image (8) of an object generated by the objective lens system (2) is located between the prism erecting system (4) and the eyepiece lens system (3), and wherein the objective lens system (2), in an order starting from the object side, comprises a first lens group G1 with a positive refractive power, a second lens group G2 with a negative refractive power and a third lens group G3 with at least one lens having a negative refractive power, and wherein the second lens group G2 is adjustable in parallel to an optical axis (7) for focusing, and wherein at least one lens with a negative refractive power of the third lens group G3 is adjustable perpendicularly to the optical axis (7) for changing the position of the image (8), wherein the third lens group G3 has a negative refractive power, **characterized in that** the focal length of the first lens group f'(G1), the focal length of the second lens group f'(G2) and the focal length of the third lens group f'(G3) fulfill the conditions -1.511 < f'(G1) / f'(G3) < -0.704 and 2.348 < f'(G2) / f'(G3) < 9.240.

2. The telescope optics according to claim 1, **characterized in that** the value of a ratio of a specific lateral displacement of the at least one lens with a negative refractive power of the third lens group G3 for image stabilization to a focal length of the third lens group G3 is in a range of between $-52 \times 10^{-3}$ /° and $-25 \times 10^{-3}$ /°, wherein the specific lateral displacement of the at least one lens with a negative refractive power of the third lens group G3 for image stabilization is defined by the lateral displacement, relative to the angle unit, of the at least one lens with a negative refractive power of the third lens group G3 with respect to a tilt of the optical axis (7).

3. The telescope optics according to claim 1 or 2, **characterized in that** a ratio of a focal length of the first lens group G1 to a focal length of the second lens group G2 has a value in a range of between -0.30 and -0.16 (-0.30 < f'(G1) / f'(G2) < -0.16).

4. The telescope optics according to one of the preceding claims, **characterized in that** a ratio of a focal length of the third lens group G3 to the focal length of the lens system formed of the first lens group G1 and the second lens group G2 has a value in a range between -1.17 and -0.60 (-1.17 < f'(G3) / f'(G1,G2) < -0.60).

5. The telescope optics according to one of the preceding claims, **characterized in that** the first lens group G1 of the objective lens system (2), in an order starting from the object side, comprises a first lens L11 with a positive refractive power, a second lens L12 with a positive refractive power and a third Lens L13 with a negative refractive power.

6. The telescope optics according to one of the preceding claims, **characterized in that** the first lens group G1 of the objective lens system (2), in an order starting from the object side, comprises a biconvex lens L11, a biconvex lens L12 and a biconcave lens L13.

7. The telescope optics according to one of the preceding claims, **characterized in that** the lenses L12 and L13 of the first lens group G1 of the objective lens system (2) form a cemented component.

8. The telescope optics according to one of the preceding claims, **characterized in that** the second lens group G2 of the objective lens system (2) comprises a convex surface in the direction of the objective and a concave surface in the direction of the eyepiece.

9. The telescope optics according to one of the preceding claims, **characterized in that** the second lens group G2 of the objective lens system (2), in an order starting from the object side, comprises a cemented component with a biconvex lens L21 and with biconcave lens L22.

10. The telescope optics according to one of claims 1 to 8, **characterized in that** the second lens group G2 of the objective lens system (2), in an order starting from the object side, comprises a cemented component with a convexo-concave lens L21 and with a convexo-concave lens L22.

11. The telescope optics according to one of the preceding claims, **characterized in that** the at least one lens with a negative refractive power of the third lens group G3 of the objective lens system (2), in an order starting from the object side, is formed as a cemented component with a concavo-convex lens L31 and a biconcave lens L32.

12. The telescope optics according to claim 11, **characterized in that** the third lens group G3 of the objective lens system (2), in an order starting from the object side, comprises a lens L33 with a positive refractive power, preferably formed as a biconvex lens, and the cemented component with a negative refractive power.

13. The telescope optics according to one of the preceding claims, **characterized in that** a field lens (5) is formed as a fourth lens group G4, wherein the fourth lens group G4, in an order starting from the object side, comprises a concavo-convex lens L41 and a cemented component of a concavo-convex lens L42 and a biconcave lens L43.

14. The telescope optics according to one of the preceding claims, **characterized in that** the eyepiece lens system (3) comprises a fifth lens group G5, wherein the fifth lens group G5, in an order starting from the object side, comprises a concavo-convex lens L51, a cemented component of a biconvex lens L52 and concavo-convex lens L53, a biconvex lens L54 and a convexo-concave lens L55.

15. The telescope optics according to claim 14, **characterized in that** the lens group G4 and the lenses L51, L52, L53 and L54 of the fifth lens group G5 are formed to be displaceable in the axial direction according to the optical axis (7).

**Revendications**

1. Optique de télescope (1) pour une lunette d'observation avec un système de lentilles d'objectif (2), avec un système d'inversion à prisme (4) et avec un premier système de lentilles d'oculaire (3), dans lequel une image (8) d'un objet générée par le système de lentilles d'objectif (2) se trouve entre le système d'inversion à prisme (4) et le système de lentilles d'oculaire (3) et dans lequel le système de lentilles d'objectif (2) comprend, dans un ordre commençant du côté de l'objectif, un premier groupe de lentilles G1 avec un pouvoir de réfraction positif, un deuxième groupe de lentilles G2 avec un pouvoir de réfraction négatif et un troisième groupe de lentilles G3 avec au moins une lentille avec un pouvoir de réfraction négatif et dans lequel le deuxième groupe de lentilles G2 peut être déplacé pour une focalisation parallèle à un axe optique (7) et dans lequel au moins une lentille à pouvoir de réfraction négatif du troisième groupe de lentilles G3 peut être déplacée perpendiculairement à l'axe optique (7) pour modifier la position de l'image (8), dans lequel le troisième groupe de lentilles G3 présente un pouvoir de réfraction négatif, **caractérisé en ce que** la distance focale du premier groupe de lentilles f'(G1), la distance focale du deuxième groupe de lentilles f'(G2) et la distance focale du troisième groupe de lentilles f'(G3) respectent les conditions $-1,511 <$ f'(G1) / f'(G3) $< -0,704$ et $2,348 <$ f'(G2) / f'(G3) $< 9,240$.

2. Optique de télescope selon la revendication 1, **caractérisée en ce que** la valeur d'un rapport entre un déplacement latéral spécifique de l'au moins une lentille à pouvoir de réfraction négatif du troisième groupe de lentilles G3 pour la stabilisation de l'image et une distance focale du troisième groupe de lentilles G3 se trouve dans un intervalle entre $-52 \times 10^{-3}$ /° et $-25 \times 10^{-3}$ /°, dans lequel le déplacement latéral spécifique de l'au moins une lentille à pouvoir de réfraction négatif du troisième groupe de lentilles G3 pour la stabilisation de l'image est défini par le décalage latéral, rapporté à l'unité d'angle, de l'au moins une lentille à pouvoir de réfraction négatif du troisième groupe de lentilles G3 par rapport à u, basculement de l'axe optique (7).

3. Optique de télescope selon la revendication 1 ou 2, **caractérisée en ce qu'**un rapport entre une distance focale du premier groupe de lentilles G1 et une distance focale du deuxième groupe de lentilles G2 présente une valeur qui se trouve dans un intervalle entre $-0,30$ et $-0,16$ ($-0,30 <$ f'(G1) / f'(G2) $< -0,16$).

4. Optique de télescope selon l'une des revendications précédentes, **caractérisé en ce qu'**un rapport entre la distance focale du troisième groupe de lentilles G3 et la distance focale du système de lentilles constitué du premier groupe de lentilles G1 et du deuxième groupe de lentilles G2 présente une valeur qui se trouve dans un intervalle entre $-1,17$ et $-0,60$ ($-1,17 <$ f'(G3) / f'(G1, G2) $< -0,60$).

5. Optique de télescope selon l'une des revendications précédentes, **caractérisé en ce que** le premier groupe de lentilles G1 du système de lentilles d'objectif (2) comprend, dans l'ordre commençant du côté de l'objet, une première lentille L11 avec un pouvoir de réfraction positif, une deuxième lentille L12 avec un pouvoir de réfraction positif et une troisième lentille L13 avec un pouvoir de réfraction négatif.

6. Optique de télescope selon l'une des revendications précédentes, **caractérisé en ce que** le premier groupe de lentilles G1 du système de lentilles d'objectif (2) comprend, dans l'ordre commençant du côté de l'objet, une lentille biconvexe L11, une lentille biconvexe L12 et une lentille biconcave L13.

7. Optique de télescope selon l'une des revendications précédentes, **caractérisé en ce que** les lentilles L12 et L13 du premier groupe de lentilles G1 du système de lentilles d'objectif (2) constituent un élément assemblé par collage.

8. Optique de télescope selon l'une des revendications précédentes, **caractérisé en ce que** le deuxième groupe de lentilles G2 du système de lentilles d'objectif (2) présente une surface convexe en direction de l'objectif et une surface concave en direction de l'oculaire.

9. Optique de télescope selon l'une des revendications précédentes, **caractérisé en ce que** le deuxième groupe de lentilles G2 du système de lentilles d'objectif (2) comprend, dans l'ordre commençant du côté de l'objet, un élément assemblé par collage avec une lentille biconvexe L21 et avec une lentille biconcave L22.

10. Optique de télescope selon l'une des revendications 1 à 8, **caractérisé en ce que** le deuxième groupe de lentilles G2 du système de lentilles d'objectif (2) comprend, dans l'ordre commençant du côté de l'objet, un élément assemblé par collage avec une lentille convexe-concave L21 et avec une lentille convexe-concave L22.

11. Optique de télescope selon l'une des revendications précédentes, **caractérisé en ce que** l'au moins une lentille à pouvoir de réfraction négatif du troisième groupe de lentilles G3 du système de lentilles d'objectif (2) est conçu, dans l'ordre commençant du côté de l'objet, comme un élément assemblé par collage avec une lentille concave-convexe L31 la lentille biconcave L32.

12. Optique de télescope selon la revendication 11, **caractérisé en ce que** le troisième groupe de lentilles G3 du système de lentilles d'objectif (2) comprend, dans l'ordre commençant du côté de l'objet, une lentille L33 à pouvoir de réfraction positif, conçue de préférence comme une lentille biconvexe et l'élément assemblé par collage à pouvoir de réfraction négatif.

13. Optique de télescope selon l'une des revendications précédentes, **caractérisé en ce qu'**une lentille de champ (5) est conçue comme un quatrième groupe de lentilles G4, dans laquelle le quatrième groupe de lentilles G4 comprend, dans l'ordre commençant du côté de l'objet, une lentille concave-convexe L41 et un élément assemblé par collage constitué d'une lentille concave-convexe L42 et une lentille biconcave L43.

14. Optique de télescope selon l'une des revendications précédentes, **caractérisé en ce que** le système de lentilles d'oculaire (3) comprend un cinquième groupe de lentilles G5, dans laquelle le cinquième groupe de lentilles G5 comprend, dans l'ordre commençant du côté de l'objet, une lentille concave-convexe L51, un élément assemblé par collage constitué d'une lentille biconvexe L52 et une lentille concave-convexe L53, une lentille biconvexe L54 et une lentille convexe-concave L55.

15. Optique de télescope selon la revendication 14, **caractérisé en ce que** le quatrième groupe de lentilles G4 et les lentilles L51, L52, L53 et L54 du cinquième groupe de lentilles G5 sont conçus de façon à pouvoir se déplacer dans la direction axiale, le long de l'axe optique (7).

**Fig.1**

**Fig.2**

EP 4 191 316 B1

Fig.3

# Fig.4

— — — 480,0 nm
— — 546,1 nm
———— 643,8 nm

### Field Curvature

### Distortion

### Lateral Color

— — — 480,0 nm
— — 546,1 nm
———— 643,8 nm

### Transverse Ray Fan Plot

$\lambda = 546,1$ nm

# Fig.5

- - - 480,0 nm
- - - 546,1 nm
------ 643,8 nm

### Field Curvature

### Distortion

### Lateral Color

- - - 480,0 nm
- - - 546,1 nm
------ 643,8 nm

### Transverse Ray Fan Plot

$\lambda = 546,1$ nm

# Fig.6

- - - 480,0 nm
- - - 546,1 nm
――― 643,8 nm

## Field Curvature

## Distortion

## Lateral Color

- - - 480,0 nm
- - - 546,1 nm
――― 643,8 nm

## Transverse Ray Fan Plot

λ = 546,1 nm

## Fig.7

‑ ‑ ‑ 480,0 nm
‑ ‑ ‑ 546,1 nm
‑‑‑‑‑ 643,8 nm

### Field Curvature

### Distortion

### Lateral Color

‑ ‑ ‑ 480,0 nm
‑ ‑ ‑ 546,1 nm
‑‑‑‑‑ 643,8 nm

### Transverse Ray Fan Plot

λ = 546,1 nm

# Fig.8

--- 480,0 nm
--·- 546,1 nm
——— 643,8 nm

**Field Curvature**

**Distortion**

**Lateral Color**

--- 480,0 nm
--·- 546,1 nm
——— 643,8 nm

**Transverse Ray Fan Plot**

$\lambda = 546,1\,nm$

# Fig.9

$- - -$ 480,0 nm
$- \cdot \! -$ 546,1 nm
$\underline{\qquad}$ 643,8 nm

### Field Curvature

### Distortion

### Lateral Color

$- - -$ 480,0 nm
$- \cdot \! -$ 546,1 nm
$\underline{\qquad}$ 643,8 nm

### Transverse Ray Fan Plot

$\lambda$ = 546,1 nm

Fig.10

EP 4 191 316 B1

L₁₁ L₁₂ L₁₃  G1

L₂₁ L₂₂  G2

L₃₃ L₃₁ L₃₂  G3

L₄₁ L₄₂ L₄₃  G4

L₅₁ L₅₂ L₅₃ L₅₄ L₅₅  G5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013104657 A1
- US 2011019986 A1
- US 2016202457 A1
- WO 2008029860 A1